# EUROPEAN PATENT APPLICATION

(11) **EP 2 306 008 A2**
(43) Date of publication of application: **06.04.2011**
(21) Application number: 10179684.5
(22) Date of filing: 24.09.2010
(51) Int. Cl.: F03D 11/00

(54) **Yaw bearing assembly for use with a wind turbine and a method for braking the yaw movement**

(30) Priority: 30.09.2009 US 570980
(71) Applicant: General Electric Company, Schenectady, NY 12345 (US)
(72) Inventor: Volmer, Matthias Alfons, 48499 Salzbergen (DE); Subramanian, Shanmuga-Priyan, 48499 Salzbergen (DE)
(74) Representative: Bedford, Grant Richard

(57) **Abstract**

A yaw bearing assembly (72, 100, 200, 300, 400, 500, 600, 700, 800, 900, 1000) is disclosed that includes a first component having a first sliding surface (82) and a second sliding surface (120), and a brake assembly coupled with respect to the first component and adjacent to at least one of the first sliding surface and the second sliding surface. The brake assembly a piston (140, 534, 638, 734, 842, 930, 1034), a sliding pad (84) coupled to the piston, and an activation device (86, 148, 202, 302, 402, 532, 636, 732, 840, 944, 1032) coupled to the piston for moving the sliding pad with respect to at least one of the first sliding surface and the second sliding surface.

## Description

The embodiments described herein relate generally to yaw bearing assemblies and, more particularly, to yaw bearing assemblies for use with wind turbines.

Known wind turbines include a yaw bearing assembly to rotate a nacelle assembly with respect to a tower. At least some known yaw bearing assemblies include ball bearings that enable the nacelle assembly to rotate on the tower. At least some known ball bearing assemblies require that yaw motors and the braking system are constantly activated to maintain a yaw direction of the nacelle assembly. Further, ball bearings are relatively costly when compared to other bearings.

At least some other known wind turbines include yaw bearing assemblies that include sliding bearings. At least one known wind turbine having a sliding bearing assembly includes active braking modules and passive braking modules coupled about a ring gear. A sliding track is positioned between a frame of a nacelle assembly and a ring gear. The active brake assembly includes a friction pad that contacts a friction pad on the ring gear. While such a brake assembly facilitates maintaining a yaw direction of the nacelle assembly, the yaw motors use energy to overcome the combined effect of aerodynamic loads and friction forces between the friction pads. At least some known brake assemblies include multiple sliding tracks, which may make replacing and/or servicing friction pads within the brake assembly difficult. Further, at least some known wind turbines include a yaw bearing assembly and a separate yaw brake system, which add to the complexity of wind turbine.

As such, it would be desirable for a yaw bearing assembly to include a sliding bearing having components that do not require the yaw motor to use energy overcome forces between two friction surfaces and/or that apply additional friction forces to resist wind turbine yawing loads during normal operation. Further, it is desirable to have an integrated yaw bearing and brake system.

In one aspect according to the present invention, a yaw bearing assembly is provided. The yaw bearing assembly includes a first component having a first sliding surface and a second sliding surface, and a brake assembly coupled with respect to the first component and adjacent to at least one of the first sliding surface and the second sliding surface. The brake assembly includes a piston, a sliding pad coupled to the piston, and an activation device coupled to the piston for moving the sliding pad with respect to at least one of the first sliding surface and the second sliding surface.

In another aspect, a wind turbine is provided. The wind turbine includes a tower, a nacelle assembly having a base, and a yaw bearing assembly operationally coupling the nacelle assembly to the tower. The yaw bearing assembly is configured to rotate the nacelle assembly with respect to the tower. The yaw bearing assembly includes a first component having a first sliding surface and a second sliding surface, and a brake assembly coupled with respect to the first component and adjacent to at least one of the first sliding surface and the second sliding surface. The brake assembly includes a piston, a sliding pad coupled to the piston, and an activation device coupled to the piston for moving the sliding pad with respect to at least one of the first sliding surface and the second sliding surface.

In yet another aspect, a method for braking a wind turbine is provided. The wind turbine includes a yaw bearing assembly coupled to a nacelle and a tower of the wind turbine. The yaw bearing assembly includes a first component having a first sliding surface and a second sliding surface and a brake assembly coupled with respect to the first component and adjacent to at least one of the first sliding surface and the second sliding surface. The brake assembly includes a piston, a sliding pad coupled to the piston, and an activation device coupled to the piston. The method includes rotating the nacelle with respect to the tower using the yaw bearing assembly, and moving the sliding pad toward at least one of the first sliding surface and the second sliding surface to apply a braking force to the one of the first sliding surface and the second sliding surface.

Various of the embodiments described herein include a brake assembly having a sliding pad that acts against a sliding surface to facilitate maintaining a yaw position of a nacelle assembly. As such, the embodiments described herein require less force to change the yaw direction of the nacelle assembly, as compared to brake assemblies that include friction pads and/or surfaces.

Various aspects and embodiments of the present invention will now be described in connection with the accompanying drawings, in which:
Figure 1 is a side elevation view of an exemplary wind turbine.
Figure 2 is a schematic cross-sectional view of an exemplary nacelle assembly that may be used with the wind turbine shown in Figure 1.
Figure 3 is perspective view of a bearing ring that may be used with the nacelle assembly shown in Figure 2.
Figure 4 is a schematic cross-sectional view of an exemplary yaw bearing assembly that may be used with the nacelle assembly shown in Figure 2.
Figure 5 is a schematic bottom view of the yaw bearing assembly shown in Figure 4.
Figure 6 is a schematic cross-sectional view of a first alternative exemplary yaw bearing assembly that may be used with the nacelle assembly shown in Figure 2.
Figure 7 is a schematic bottom view of the yaw bearing assembly shown in Figure 6.
Figure 8 is a schematic cross-sectional view of a second alternative exemplary yaw bearing assembly that may be used with the nacelle assembly shown in Figure 2.
Figure 9 is a schematic side view of the yaw bearing assembly shown in Figure 8.
Figure 10 is a schematic cross-sectional view of a third alternative exemplary yaw bearing assembly that may be used with the nacelle assembly shown in Figure 2.
Figure 11 is a schematic cross-sectional view of a fourth alternative exemplary yaw bearing assembly that may be used with the nacelle assembly shown in Figure 2.
Figure 12 is a schematic cross-sectional view of a fifth alternative exemplary yaw bearing assembly that may be used with the nacelle assembly shown in Figure 2.
Figure 13 is a schematic cross-sectional view of a sixth alternative exemplary yaw bearing assembly that may be used with the nacelle assembly shown in Figure 2.
Figure 14 is a schematic cross-sectional view of a seventh alternative exemplary yaw bearing assembly that may be used with the nacelle assembly shown in Figure 2.
Figure 15 is a schematic cross-sectional view of the yaw bearing assembly shown in Figure 14.
Figure 16 is a schematic cross-sectional view of an eighth alternative exemplary yaw bearing assembly that may be used with the nacelle assembly shown in Figure 2.
Figure 17 is a schematic cross-sectional view of a ninth alternative exemplary yaw bearing assembly that may be used with the nacelle assembly shown in Figure 2.
Figure 18 is a flowchart of an exemplary method that may be used with any of the embodiments shown in Figures 3-17.

Various of the embodiments described herein include yaw bearing assemblies having a brake assembly that facilitate maintaining a yaw position of a nacelle with respect to a tower. The brake assembly includes an activation device that applies a pre-loaded force to a ring gear to facilitate maintaining the yaw position of the nacelle. More specifically, the pre-loaded force can be adjusted by adjusting a position of a sliding pad of the braking assembly with respect to a sliding surface of the ring gear. Further, the embodiments described herein use a sliding bearing rather than ball bearings to facilitate rotating the nacelle with respect to the tower. Moreover, a segmented ring is described herein that can used with any bearing ring and/or supporting ring described herein.

The yaw bearing assemblies described herein include brake assemblies that are configured to have one or more of the following load paths: (1) a motor (electrical signals to rotational movement) to a spindle (rotational movement to linear movement), to a lever (linear movement to rotational movement), to a spindle (rotational movement to linear movement), to a piston that linearly moves a sliding pad; (2) a cylinder (pressure force to linear movement) to a lever (linear movement to rotational movement), to a spindle (rotational movement to linear movement), to a piston that linearly moves a sliding pad; (3) a cylinder (pressure force to linear movement) to a lever (linear movement to rotational movement), to a piston that linearly moves a sliding pad; (4) a cylinder (pressure force to linear movement) to a piston that linearly moves a sliding pad; and/or (5) a mechanism, such as springs (pressure force to linear movement) to a piston that linearly moves a sliding pad.

Further, the embodiments described herein may be used with any suitable wind turbine and/or nacelle assembly rather than being limited to use with the wind turbine and nacelle assembly described herein.

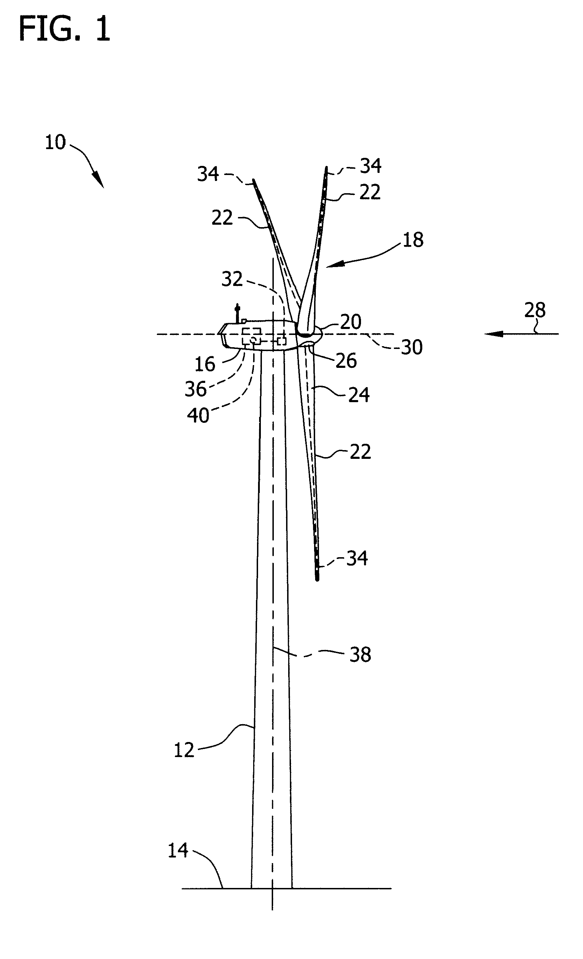

Figure 1 is a perspective view of an exemplary wind turbine 10. In the exemplary embodiment, wind turbine 10 is a nearly horizontal-axis wind turbine, however, wind turbine 10 may have any suitable tilt angle. Alternatively, wind turbine 10 may be a vertical axis wind turbine. In the exemplary embodiment, wind turbine 10 includes a tower 12 that extends from a supporting surface 14, a nacelle assembly 16 mounted on tower 12, and a rotor 18 that is coupled to nacelle assembly 16. Rotor 18 includes a rotatable hub 20 and at least one blade 22 coupled to and extending outward from hub 20. In the exemplary embodiment, rotor 18 has three blades 22. In an alternative embodiment, rotor 18 includes any suitable number of blades 22. In the exemplary embodiment, tower 12 is fabricated from tubular steel such that a cavity (not shown in Figure 1) is defined between supporting surface 14 and nacelle assembly 16. In an alternative embodiment, tower 12 is any suitable type of tower. A height of tower 12 may be selected based upon factors and conditions known in the art.

Blades 22 are spaced about hub 20 to facilitate rotating rotor 18 to enable kinetic energy to be transferred from the wind into usable mechanical energy, and subsequently, electrical energy. Blades 22 are mated to hub 20 by coupling a blade root portion 24 to hub 20 at a plurality of load transfer regions 26. Load transfer regions 26 have a hub load transfer region and a blade load transfer region (both not shown in Figure 1). Loads induced to blades 22 are transferred to hub 20 via load transfer regions 26.

In the exemplary embodiment, blades 22 have a length ranging from about 15 meters (m) to about 91 m. Alternatively, blades 22 may have any length that enables wind turbine 10 to function as described herein. For example, other non-limiting examples of blade lengths include 10 m or less, 20 m, and 37 m. As wind strikes blades 22 from a direction 28, rotor 18 is rotated about an axis of rotation 30. As blades 22 are rotated and subjected to centrifugal forces, blades 22 are also subjected to various forces and moments. As such, blades 22 may deflect and/or rotate from a neutral, or non-deflected, position to a deflected position. Moreover, a pitch angle of blades 22, i.e., an angle that determines a perspective of blades 22 with respect to direction 28 of the wind, may be changed by a pitch adjustment system 32 to control power generated by wind turbine 10 by adjusting an angular position of a profile of at least one blade 22 relative to wind vector. Pitch axes 34 for blades 22 are shown in Figure 1. In the exemplary embodiment, a pitch of each blade 22 is controlled individually by a control system 36. Alternatively, the blade pitch for all blades may be controlled simultaneously by control system 36. Further, in the exemplary embodiment, as direction 28 changes, a yaw direction of nacelle assembly 16 may be controlled about a yaw axis 38 to position blades 22 with respect to direction 28.

In the exemplary embodiment, control system 36 is shown as being centralized within nacelle assembly 16, however control system 36 may be a distributed system throughout wind turbine 10, on supporting surface 14, within a wind farm, and/or at a remote control center. Control system 36 includes a processor 40 configured to perform the methods and/or steps described herein. Further, many of the other components described herein include a processor. As used herein, the term "processor" is not limited to integrated circuits referred to in the art as a computer, but broadly refers to a controller, a microcontroller, a microcomputer, a programmable logic controller (PLC), an application specific integrated circuit, and other programmable circuits, and these terms are used interchangeably herein. It should be understood that processor 40 and/or control system 36 can also include memory, input channels, and/or output channels.

In the embodiments described herein, memory may include, without limitation, a computer-readable medium, such as a random access memory (RAM), and a computer-readable non-volatile medium, such as flash memory. Alternatively, a floppy disk, a compact disc-read only memory (CD-ROM), a magneto-optical disk (MOD), and/or a digital versatile disc (DVD) may also be used. Also, in the embodiments described herein, input channels may include, without limitation, sensors and/or computer peripherals associated with an operator interface, such as a mouse and a keyboard. Further, in the exemplary embodiment, output channels may include, without limitation, a control device, an operator interface monitor and/or a display.

Processors described herein process information transmitted from a plurality of electrical and electronic devices that may include, without limitation, sensors, actuators, compressors, control systems, and/or monitoring devices. Such processors may be physically located in, for example, a control system, a sensor, a monitoring device, a desktop computer, a laptop computer, a PLC cabinet, and/or a distributed control system (DCS) cabinet. RAM and storage devices store and transfer information and instructions to be executed by the processor(s). RAM and storage devices can also be used to store and provide temporary variables, static (i.e., non-changing) information and instructions, or other intermediate information to the processors during execution of instructions by the processor(s). Instructions that are executed may include, without limitation, wind turbine control commands. The execution of sequences of instructions is not limited to any specific combination of hardware circuitry and software instructions.

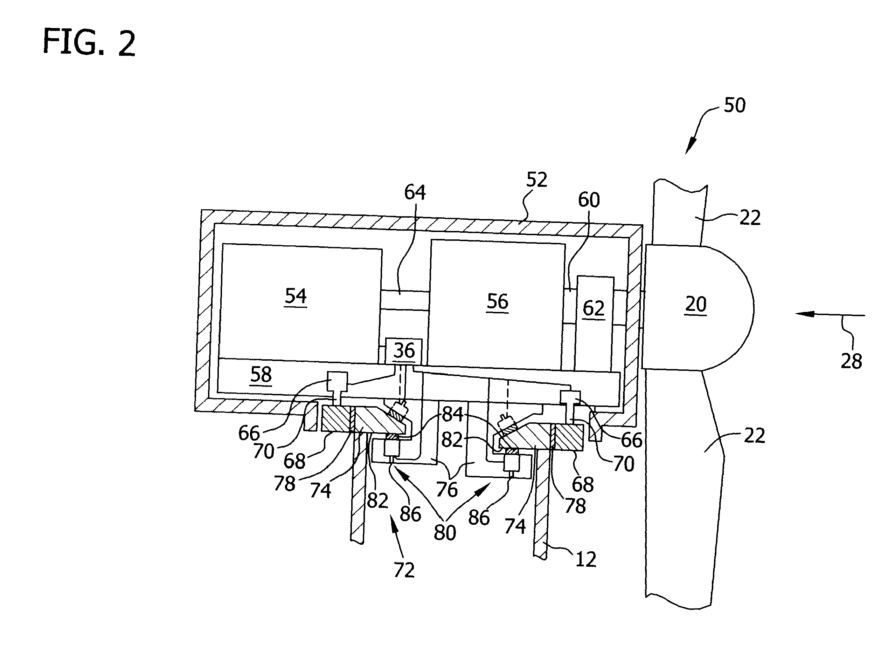

Figure 2 is a schematic cross-sectional view of an exemplary nacelle assembly 16 that may be used with wind turbine 10 (shown in Figure 1). Additional or alternative components are indicated by dashed lines in Figure 2.

Nacelle assembly 16 includes a nacelle housing 52 coupled about a generator 54, a gearbox 56, and a base 58. Generator 54 and gearbox 56 are supported on base 58. A low speed shaft 60 extends between gearbox 56 and hub 20 and is supported on base 58 by a main bearing 62. A high speed shaft 64 extends between gearbox 56 and generator 54. During operation of wind turbine 10, wind rotates blades 22, which rotates hub 20 and low speed shaft 60. Through gearbox 56, low speed shaft 60 rotates high speed shaft 64 to drive generator 54 to generate power. In the exemplary embodiment, high speed shaft 64 rotates at a higher rotation per minute (rpm) than an rpm at which low speed shaft 60 rotates. Alternatively, wind turbine 10 does not include gearbox 56.

At least one yaw motor 66 is coupled to base 58 for controlling a yaw direction of nacelle assembly 16. In the exemplary embodiment, control system 36 is coupled in communication with, such as coupled in operational control communication with, yaw motor 66 to facilitate aligning nacelle assembly 16, hub 20, and/or blades 22 with a yaw direction as determined by control system 36 and/or an operator of wind turbine 10. As used herein, the term "operational control communication" refers to a link, such as a conductor, a wire, and/or a data link, between two or more components of wind turbine 10 that enables signals, electric currents, and/or commands to be communicated between the two or more components. The link is configured to enable one component to control an operation of another component of wind turbine 10 using the communicated signals, electric currents, and/or commands. Each yaw motor 66 includes a pinion gear 68 coupled to a shaft 70 such that yaw motor 66 drives shaft 70 to rotate pinion gear 68.

In the exemplary embodiment, nacelle assembly 16 also includes a yaw bearing assembly 72 operationally coupling nacelle assembly 16, at base 58, to tower 12. More specifically, yaw bearing assembly 72 includes a ring gear 74 and a support ring 76. In the exemplary embodiment, ring gear 74 is coupled to tower 12, and support ring 76 is coupled to base 58. Alternatively, ring gear 74 is coupled to base 58 and support ring 76 is coupled to tower 12. In the exemplary embodiment, ring gear 74 includes teeth 78 that engage pinion gear 68 to rotate base 58 with respect to tower 12.

Supporting ring 76 includes at least one brake assembly 80 in contact with ring gear 74. More specifically, brake assembly 80 is in contact with a sliding surface 82 of ring gear 74. In the exemplary embodiment, each brake assembly 80 includes a sliding pad 84 coupled thereto and an activation device 86 configured to move sliding pad 84 of brake assembly 80 with respect to, such as toward and away from, ring gear 74. In one embodiment, activation device 86 is configured to apply a pre-loaded force to ring gear 74. Control system 36 is coupled in communication with, such as coupled in operational control communication with, brake assembly 80 and/or activation device 86 to control operation of brake assembly 80 and/or activation device 86. When more than one brake assembly 80 is included in yaw bearing assembly 72, brake assemblies 80 are spaced circumferentially about supporting ring 76 as shown in Figure 2.

To control a yaw of nacelle assembly 16, yaw motors 66 are activated to rotate nacelle assembly 16 about yaw axis 38 to position rotor 18 with respect to direction 28. Once nacelle assembly 16 is at a desired yaw position, brake assembly 80 is activated to maintain the yaw position of nacelle assembly 16.

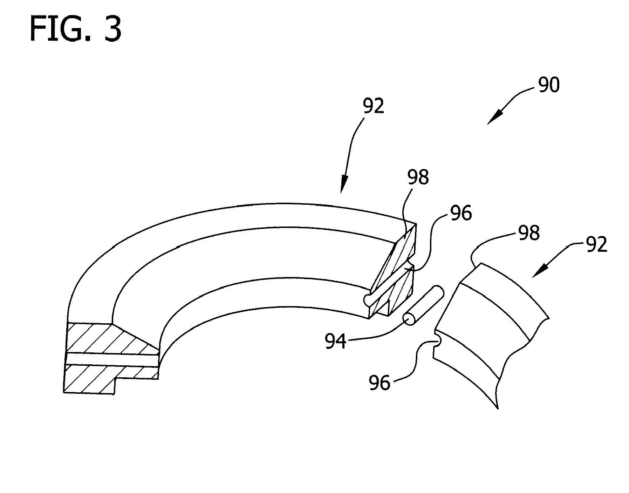

Figure 3 is perspective view of a ring 90 that may be used with nacelle assembly 16 (shown in Figure 2) as ring gear 74 and/or supporting ring 76. In the exemplary embodiment, ring 90 includes a plurality of segments 92 that are coupled circumferentially about tower 12 (shown in Figure 2) and/or base 58 (shown in Figure 2). More specifically, a pin 94 is positioned between each segment 92 to coupled segments 92 together to form ring 90. Each segment includes a pin channel 96 defined in an end surface 98 thereof for retaining pin 94 between segments 92. When two segments 92 are abutted at end surfaces 98, adjacent pin channels 96 define a pin opening into which a pin 94 can be inserted. Segments 92 and/or pins 94 are configured to facilitate maintaining and/or replacing a pad, such as a sliding pad coupled to a sliding surface, and/or a gear, such as teeth 78 (shown in Figure 2) on ring gear 74 (shown in Figure 2). Although ring 90 is described as having teeth 78 defined about an outer surface of ring 90, ring 90 can alternatively or addition include teeth 78 defined along an inner surface of ring 90.

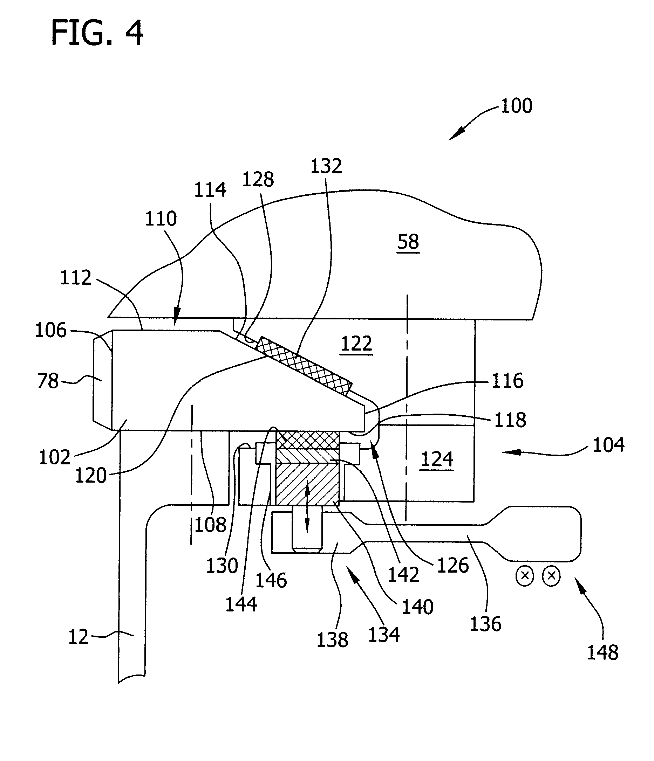

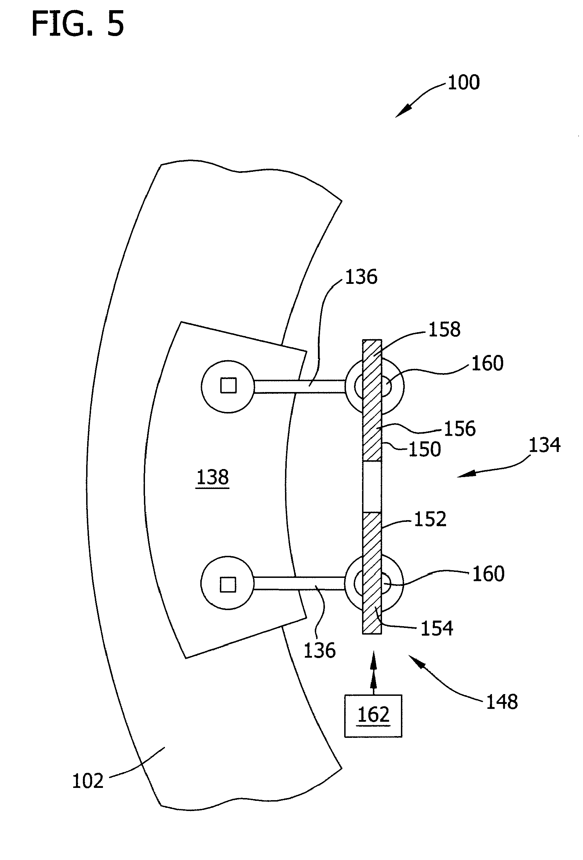

Figure 4 is a schematic cross-sectional view of an exemplary yaw bearing assembly 100 that may be used with nacelle assembly 16 (shown in Figure 2) as yaw bearing assembly 72 (shown in Figure 2). Figure 5 is a schematic bottom view of yaw bearing assembly 100. Components shown in Figures 1, 2, 4, and 5 are numbered similarly.

In the exemplary embodiment, yaw bearing assembly 100 includes a ring gear 102 coupled to tower 12 and a supporting ring 104 coupled to base 58. Ring gear 102 includes a substantially vertically-aligned tooth face 106, a substantially horizontally-aligned lower face 108, and an upper face 110 having a substantially horizontal portion 112 and a tapered portion 114. A substantially vertically-aligned inner face 116 extends between upper face 110 and lower face 108. Tooth face 106 includes a plurality of teeth 78 configured to engage pinion gear 68 (shown in Figure 2). Lower face 108 includes a first or lower sliding surface 118, and tapered portion 114 of upper face 110 includes a second or upper sliding surface 120.

Supporting ring 104 includes an upper portion 122 coupled to base 58 and a lower portion 124 coupled to upper portion 122. Upper portion 122 and lower portion 124 define a groove 126 that is shaped to correspond to a shape of ring gear 102. More specifically, in the exemplary embodiment, upper portion 122 includes an angled lower face 128 that corresponds to tapered portion 114 of upper face 110, and lower portion 124 includes a substantially horizontally-aligned upper face 130 that corresponds to lower face 108 of ring gear 102. Lower face 128 is positioned adjacent upper sliding surface 120, and upper face 130 is positioned adjacent lower sliding surface 118. An upper sliding pad 132 is coupled to lower face 128 of supporting ring 104 adjacent to upper sliding surface 120 of ring gear 102. In the exemplary embodiment, upper sliding pad 132 extends circumferentially about lower face 128 and is in contact with upper sliding surface 120. Upper sliding pad 132 can be segmented to facilitate maintenance and/or repair. Alternatively, upper sliding pad 132 includes a plurality of pads that are spaced circumferentially about lower face 128.

In the exemplary embodiment, a brake assembly 134 is coupled to lower portion 124 of supporting ring 104 and at least partially extends through upper face 130. Brake assembly 134 includes at least one lever arm 136, a caliper 138 coupled to lever arm 136, a piston 140 coupled to caliper 138, a shoe 142 coupled to piston 140, and a lower sliding pad 144 coupled to shoe 142. Piston 140 and/or shoe 142 is threaded to convert rotational movement into linear movement of lower sliding pad 144. Alternatively, brake assembly 134 does not include shoe 142 and sliding pad 144 is coupled to piston 140. Further, it should be understood that caliper 138 can include any suitable number of pistons 140 coupled thereto. In the exemplary embodiment, lever arms 136 are each configured to rotate with respect to caliper 138. At least a portion of piston 140 and/or shoe 142 is positioned within an opening 146 defined through lower portion 124 of supporting ring 104. Lower sliding pad 144 is positioned to extend beyond upper face 130 to contact lower sliding surface 118. In the exemplary embodiment, upper sliding pad 132 and lower sliding pad 144 are formed from any suitable material that enables supporting ring 104 to rotate with respect to ring gear 102. More specifically, materials for upper sliding pad 132 and lower sliding pad 144 and/or material for upper sliding surface 120 and/or lower sliding surface 118 are selected to enable yaw bearing assembly 100 to function as described herein. In a particular embodiment, upper sliding surface 120 and lower sliding surface 118 are steel and upper sliding pad 132 and lower sliding pad 144 are a conventional sliding material.

An activation device 148 is operationally coupled to lever arm 136 for controlling movement of piston 140 with respect to, such as toward and away from, lower sliding surface 118. In the exemplary embodiment, lower sliding pad 144 is in contact with lower sliding surface 118. Further, in the exemplary embodiment, brake assembly 134 includes two lever arms 136 coupled to caliper 138 as shown in Figure 5, however, it should be understood that brake assembly 134 may include any suitable number of lever arms 136.

As shown in Figure 5, activation device 148 includes a double-threaded spindle 150 in the exemplary embodiment. More specifically, spindle 150 includes a first end 152 having threads 154 in a first direction and a second end 156 having threads 158 in a second direction opposite to the first direction. Each lever arm 136 includes an opening 160 having threading corresponding to threads 154 or threads 158 of spindle 150. Yaw bearing assembly 100 includes a motor, such as a hydraulic unit and/or any other suitable type of motor. Motor 162 is operatively coupled to at least one spindle 150. Motor 162 rotates spindle 150 to move lower sliding pad 144 toward or away from lower sliding surface 118. More specifically, when spindle 150 is rotated in a first direction, spindle 150 moves toward caliper 138 and shoe 142 and/or piston 140 is rotated by lever arm 136 to apply a braking force to ring gear 102 by moving lower sliding pad 144 toward lower sliding surface 118. When motor 162 rotates spindle 150 in a second direction, spindle 150 moves away from caliper 138 and shoe 142 and/or piston 140 is rotated by lever arm 136 to lessen the brake force and enable supporting ring 104 to move rotationally with respect to ring gear 102. In the exemplary embodiment, control system 36 (shown in Figure 2) is coupled in communication with, such as in operational control communication with, motor 162 for controlling a rotation of spindle 150.

During operation of wind turbine 10 (shown in Figures 1 and 2), a yaw direction of nacelle assembly 16 is controlled using yaw motors 66 (shown in Figure 2) and yaw bearing assembly 100. More specifically, to change the yaw direction of nacelle assembly 16, spindle 150 is rotated to move caliper 138 away from lower sliding surface 118. As such, piston 140, shoe 142, and lower sliding pad 144 are moved away from lower sliding surface 118 with lower sliding pad 144 maintaining contact with lower sliding surface 118. By moving lower sliding pad 144 away from lower sliding surface 118, a braking force against ring gear 102 is reduced to allow movement between ring gear 102 and supporting ring 104. Yaw motors 66 are activated to rotate base 58 with respect to tower 12 to position nacelle assembly 16 at a desired yaw direction and then are deactivated.

To maintain the yaw direction of nacelle assembly 16, motor 162 is activated to rotate spindle 150 to move caliper 138 toward lower sliding surface 118. As such, piston 140, shoe 142, and lower sliding pad 144 are moved toward lower sliding surface 118 to increase the braking force applied to lower sliding surface 118. Accordingly, the ability of supporting ring 104 to move with respect to ring gear 102 is reduced such that the yaw direction of nacelle assembly 16 is maintained.

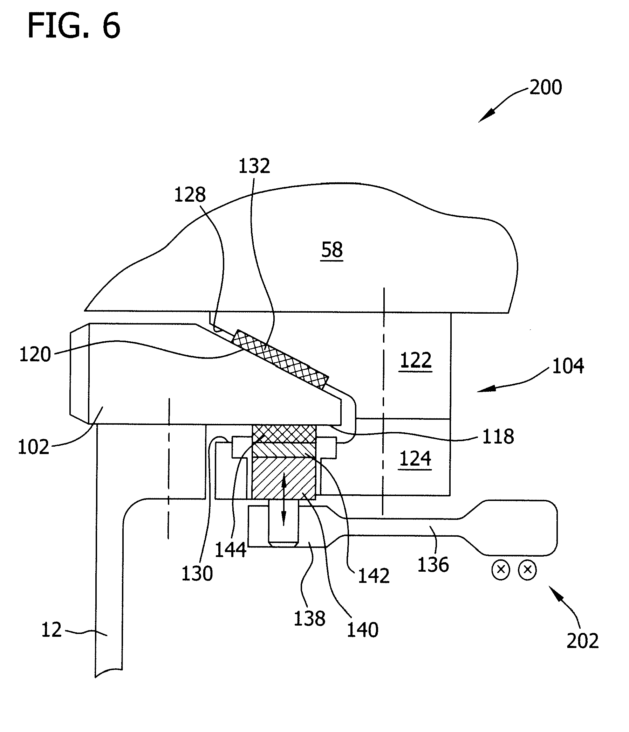

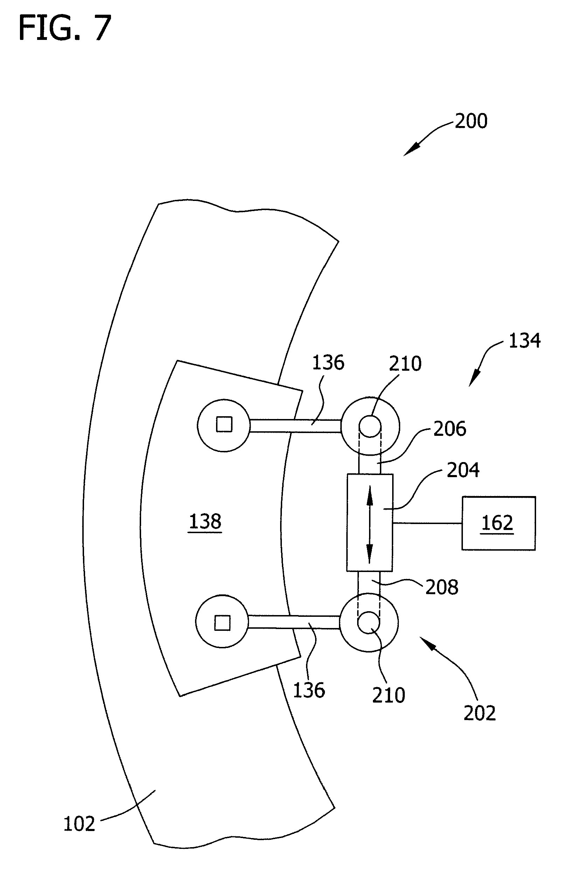

Figure 6 is a schematic cross-sectional view of a first alternative exemplary yaw bearing assembly 200 that may be used with nacelle assembly 16 (shown in Figure 2) as yaw bearing assembly 72 (shown in Figure 2). Figure 7 is a schematic bottom view of yaw bearing assembly 200. Unless otherwise described, yaw bearing assembly 200 includes components that are similar to the components described above with reference to yaw bearing assembly 100. Yaw bearing assembly 200 includes activation device 202 rather than activation device 148 (shown in Figures 4 and 5).

In the exemplary embodiment, activation device 202 includes a cylinder 204 having a first rod 206 and a second rod 208 coupled thereto. Each rod 206 and 208 is coupled to a respective lever arm 136 at a pivot device 210. In a particular embodiment, cylinder 204 is a hydraulic cylinder. Alternatively, cylinder 204 is a pneumatic cylinder. In the exemplary embodiment, cylinder 204 is configured to move rods 206 and 208 toward and away from each other to move lower sliding pad 144 with respect to lower sliding surface 118.

Motor 162 is coupled to at least one cylinder 204 to control movement of lower sliding pad 144 with respect to lower sliding surface 118. More specifically, when cylinder 204 forces rods 206 and 208 in a first direction, such as away from each other, cylinder 204 is moved toward caliper 138 and show 142 and/or piston 140 is rotated by lever arm 136 to apply a braking force to ring gear 102 by moving lower sliding pad 144 toward lower sliding surface 118. When cylinder 204 forces rods 206 and 208 in a second direction, such as toward each other, cylinder 204 is moved away from caliper 138 and shoe 142 and/or piston 140 is rotated by lever arm 136 to lessen the brake force and to enable supporting ring 104 to move rotationally with respect to ring gear 102. In the exemplary embodiment, control system 36 (shown in Figure 2) is coupled in communication with, such as in operational control communication with, motor 162 for controlling a movement of cylinder 204.

During operation of wind turbine 10 (shown in Figures 1 and 2), a yaw direction of nacelle assembly 16 is controlled using yaw motors 66 (shown in Figure 2) and yaw bearing assembly 200. More specifically, to change the yaw direction of nacelle assembly 16, cylinder 204 is activated to move caliper 138 away from lower sliding surface 118. As such, piston 140, shoe 142, and lower sliding pad 144 are moved away from lower sliding surface 118 with lower sliding pad 144 maintaining contact with lower sliding surface 118. By moving lower sliding pad 144 away from lower sliding surface 118, a braking force against ring gear 102 is reduced to allow movement between ring gear 102 and supporting ring 104. Yaw motors 66 are activated to rotate base 58 with respect to tower 12 to position nacelle assembly 16 at a desired yaw direction and then are deactivated.

To maintain the yaw direction of nacelle assembly 16, motor 162 activates cylinder 204 to move lever arms 136. As such, piston 140, shoe 142, and lower sliding pad 144 are moved toward lower sliding surface 118 to increase the braking force applied to lower sliding surface 118. Accordingly, the ability of supporting ring 104 to move with respect to ring gear 102 is reduced such that the yaw direction of nacelle assembly 16 is maintained.

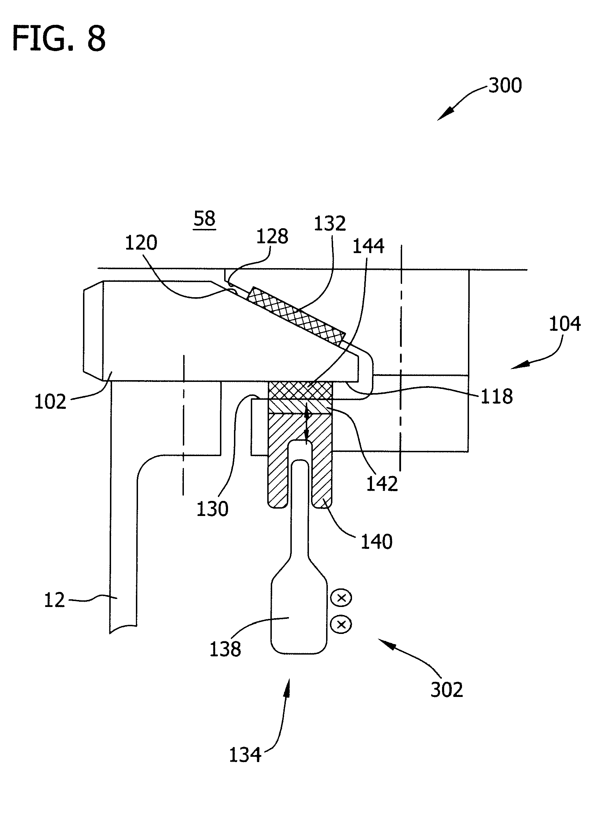

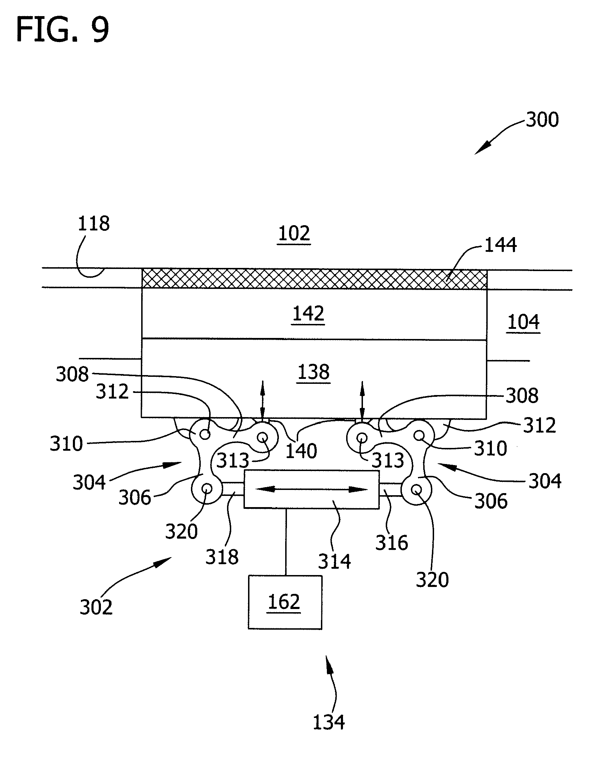

Figure 8 is a schematic cross-sectional view of a second alternative exemplary yaw bearing assembly 300 that may be used with nacelle assembly 16 (shown in Figure 2) as yaw bearing assembly 72 (shown in Figure 2). Figure 9 is a schematic side view of yaw bearing assembly 300. Unless otherwise described, yaw bearing assembly 300 includes components that are similar to the components described above with reference to yaw bearing assembly 100.

More specifically, yaw bearing assembly 300 includes activation device 302 rather than activation device 148 (shown in Figures 4 and 5). Further, yaw bearing assembly 300 includes lever brackets 304 rather than lever arms 136. Each lever bracket 304 is substantially L-shaped having a first portion 306 and a second portion 308 that is substantially perpendicular to first portion 306 and coupled to first portion 306 at a corner 310. In the exemplary embodiment, first portion 306, corner 310, and second portion 308 are formed integrally as one-piece, however, lever bracket 304 can be formed from any suitable number of separate components. Corner 310 is coupled to caliper 138 at a pivot device 312. Second portion 308 is coupled to piston 140 at a pivot point 313 for moving piston 140 with respect to lower sliding surface 118.

Further, in the exemplary embodiment, activation device 302 includes a cylinder 314 having a first rod 316 and a second rod 318 coupled thereto. Alternatively, activation device 302 includes spindle 150 rather than cylinder 314, first rod 316, and second rod 318. In the exemplary embodiment, each rod 316 and 318 is coupled to a respective lever bracket 304 at a pivot point 320. Cylinder 314 may include a hydraulic cylinder and/or a pneumatic cylinder. In the exemplary embodiment, cylinder 314 is configured to move rods 316 and 318 with respect to each other, such as toward and away from each other, to move second portion 308 of lever brackets 304 with respect to, for example, toward and away from, lower sliding surface 118. In an alternative embodiment, rather than including cylinder 314 and rods 316 and 318, activation device 302 includes spindle 150 (shown in Figures 4 and 5). Further, although lever brackets 304 are shown applying a vertical or axial force to piston 140, lever brackets 304 can apply a radial force to piston 140 in an alternative embodiment.

In the exemplary embodiment, motor 162 is coupled to at least one cylinder 314 to control movement of lever brackets 304 with respect to, such as toward or away from, lower sliding surface 118. More specifically, when cylinder 314 forces rods 316 and 318 in a first direction, such as toward each other, piston 140 is moved toward lower sliding surface 118 to apply a braking force to ring gear 102. When cylinder 314 forces rods 316 and 318 in a second direction, such as away from each other, piston 140 is moved away from lower sliding surface 118 and the brake force is lessened to enable supporting ring 104 to move rotationally with respect to ring gear 102. In the exemplary embodiment, control system 36 (shown in Figure 2) is coupled in communication with, such as in operational control communication with, motor 162 for controlling a movement of cylinder 314. In an alternative embodiment, rather than including cylinder 314 and rods 316 and 318, activation device 302 includes spindle 150 (shown in Figures 4 and 5).

During operation of wind turbine 10 (shown in Figures 1 and 2), a yaw direction of nacelle assembly 16 is controlled using yaw motors 66 (shown in Figure 2) and yaw bearing assembly 300. More specifically, to change the yaw direction of nacelle assembly 16, cylinder 314 is activated to move piston 140 away from lower sliding surface 118. As such, shoe 142 and lower sliding pad 144 are moved away from lower sliding surface 118 with lower sliding pad 144 maintaining contact with lower sliding surface 118. By moving lower sliding pad 144 away from lower sliding surface 118, a braking force against ring gear 102 is reduced to allow movement between ring gear 102 and supporting ring 104. Yaw motors 66 are activated to rotate base 58 with respect to tower 12 to position nacelle assembly 16 at a desired yaw direction and then are deactivated.

To maintain the yaw direction of nacelle assembly 16, motor 162 activates cylinder 314 to move piston 140 toward lower sliding surface 118. As such, shoe 142 and lower sliding pad 144 are moved toward lower sliding surface 118 to increase the braking force applied to lower sliding surface 118. Accordingly, the ability of supporting ring 104 to move with respect to ring gear 102 is reduced such that the yaw direction of nacelle assembly 16 is maintained.

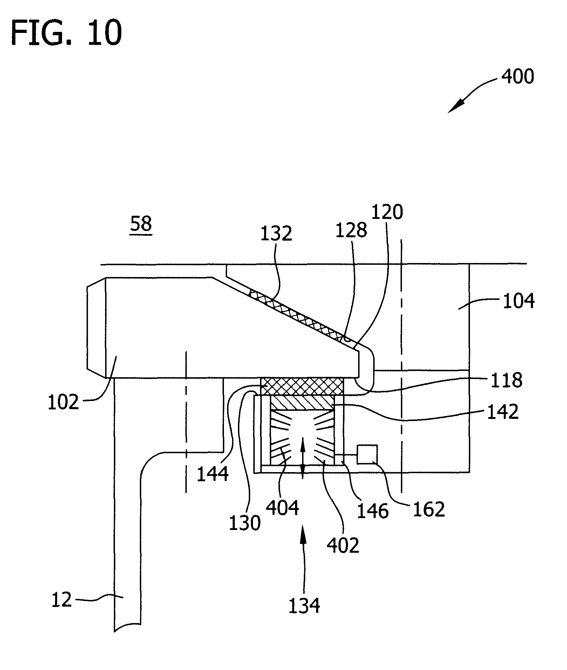

Figure 10 is a schematic cross-sectional view of a third alternative exemplary yaw bearing assembly 400 that may be used with nacelle assembly 16 (shown in Figure 2) as yaw bearing assembly 72 (shown in Figure 2). Unless otherwise described, yaw bearing assembly 400 includes components that are similar to the components described above with reference to yaw bearing assembly 100. Yaw bearing assembly 400 includes activation device 402 rather than activation device 148 (shown in Figures 4 and 5).

In the exemplary embodiment, activation device 402 includes cylinder 204 and/or cylinder 314 (shown in Figures 6-9), springs 404, and/or spindle 150 (shown in Figures 4 and 5) coupled between piston 140 and opening 146. In the exemplary embodiment, cylinder 204 and/or cylinder 314, springs 404, and/or spindle 150 is configured to directly move piston 140 toward and away from lower sliding surface 118. Further, as an alternative or an addition to cylinder 204 and/or cylinder 314, springs 404, and/or spindle 150, activation device 402 includes mechanical levers positioned within opening 146 to move piston 140.

In the exemplary embodiment, motor 162 is coupled to activation device 402 for control of the components thereof, such as cylinder 204 and/or 314, springs 404, and/or spindle 150, for moving piston 140 with respect to, such as toward or away from, lower sliding surface 118. More specifically, activation device 402 forces piston 140 in a first direction toward lower sliding surface 118 to apply a braking force to ring gear 102. Activation device 402 forces piston 140 in a second direction away from lower sliding surface 118 to lessen the brake force to enable supporting ring 104 to move rotationally with respect to ring gear 102. In the exemplary embodiment, control system 36 (shown in Figure 2) is coupled in communication with, such as in operational control communication with, motor 162 for controlling a movement of activation device 402.

During operation of wind turbine 10 (shown in Figures 1 and 2), a yaw direction of nacelle assembly 16 is controlled using yaw motors 66 (shown in Figure 2) and yaw bearing assembly 400. More specifically, to change the yaw direction of nacelle assembly 16, activation device 402 is activated to move piston 140 away from lower sliding surface 118. As such, shoe 142 and lower sliding pad 144 are moved away from lower sliding surface 118 with lower sliding pad 144 maintaining contact with lower sliding surface 118. By moving lower sliding pad 144 away from lower sliding surface 118, a braking force against ring gear 102 is reduced to allow movement between ring gear 102 and supporting ring 104. Yaw motors 66 are activated to rotate base 58 with respect to tower 12 to position nacelle assembly 16 at a desired yaw direction and then are deactivated.

To maintain the yaw direction of nacelle assembly 16, motor 162 activates activation device 402 to move piston 140 toward lower sliding surface 118. As such, shoe 142 and lower sliding pad 144 are moved toward lower sliding surface 118 to increase the braking force applied to lower sliding surface 118. Accordingly, the ability of supporting ring 104 to move with respect to ring gear 102 is reduced such that the yaw direction of nacelle assembly 16 is maintained.

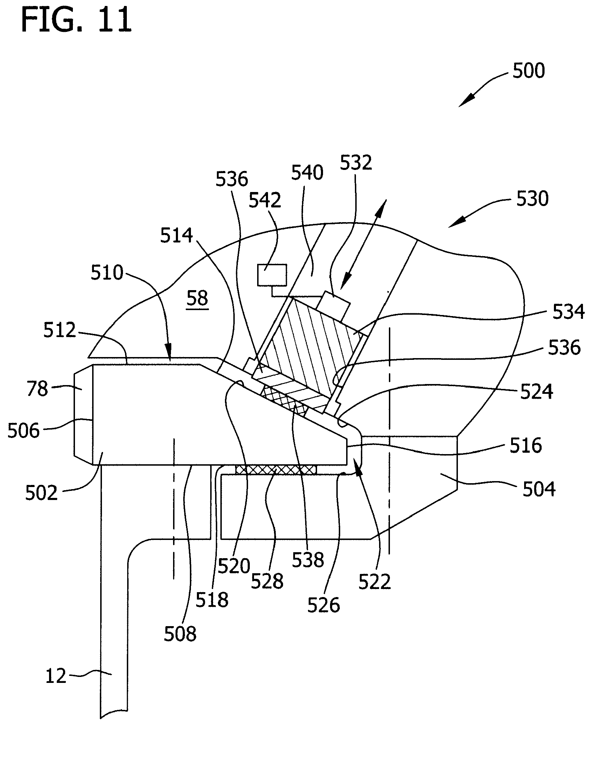

Figure 11 is a schematic cross-sectional view of a fourth alternative exemplary yaw bearing assembly 500 that may be used with nacelle assembly 16 (shown in Figure 2) as yaw bearing assembly 72 (shown in Figure 2). Similar components shown in Figures 1, 2, and 11 are numbered similarly.

In the exemplary embodiment, yaw bearing assembly 500 includes a ring gear 502 coupled to tower 12 and a supporting ring 504 coupled to base 58. Ring gear 502 includes a substantially vertically-aligned tooth face 506, a substantially horizontally-aligned lower face 508, and an upper face 510 having a substantially horizontal portion 512 and a tapered portion 514. A substantially vertically-aligned inner face 516 extends between upper face 510 and lower face 508. Tooth face 506 includes a plurality of teeth 78 configured to engage pinion gear 68 (shown in Figure 2). Lower face 508 includes a lower sliding surface 518, and tapered portion 514 of upper face 510 includes an upper sliding surface 520.

Supporting ring 504 is coupled to base 58. Alternatively, supporting ring 504 includes an upper portion coupled to base 58 and a lower portion coupled to the upper portion, as shown and described with respect to Figures 4 and 5. In the exemplary embodiment, base 58 and supporting ring 504 define a groove 522 that is shaped to correspond to a shape of ring gear 502. More specifically, in the exemplary embodiment, base 58 includes an angled lower face 524 that corresponds to tapered portion 514 of upper face 510, and supporting ring 504 includes a substantially horizontally-aligned upper face 526 that corresponds to lower sliding surface 518 of ring gear 502. Lower face 524 is positioned adjacent upper sliding surface 520, and upper face 526 is positioned adjacent to lower sliding surface 518. A lower sliding pad 528 is coupled to upper face 526 of supporting ring 504 adjacent to lower sliding surface 518 of ring gear 502. In the exemplary embodiment, lower sliding pad 528 extends circumferentially about upper face 526 and is in contact with lower sliding surface 518. Lower sliding pad 528 can be segmented to facilitate maintenance and/or repair. Alternatively, lower sliding pad 528 includes a plurality of pads that are spaced circumferentially about upper face 526.

In the exemplary embodiment, a brake assembly 530 is coupled to base 58 and at least partially extends through lower face 524. Brake assembly 530 includes an activation device 532, a piston 534 coupled to activation device 532, a shoe 536 coupled to piston 534, and an upper sliding pad 538 coupled to shoe 536. It should be understood that brake assembly 530 can include any suitable number of pistons 534 coupled to activation device 532. In an alterative embodiment, brake assembly 530 does not include shoe 536 and upper sliding pad 538 is coupled to piston 534. In the exemplary embodiment, at least a portion of piston 534 and/or shoe 536 is positioned within an opening 540 defined within lower face 524 of base 58. Upper sliding pad 538 is positioned to extend outwardly from lower face 524 to contact upper sliding surface 520. In the exemplary embodiment, upper sliding pad 538 and lower sliding pad 528 are formed from any suitable material that enables supporting ring 504 to rotate with respect to ring gear 502. More specifically, materials for upper sliding pad 538 and lower sliding pad 528 and/or material for upper sliding surface 520 and/or lower sliding surface 518 are selected to enable yaw bearing assembly 500 to function as described herein. In a particular embodiment, upper sliding surface 520 and lower sliding surface 518 are steel and upper sliding pad 538 and lower sliding pad 528 are a conventional sliding material.

Activation device 532 is directly or indirectly coupled to piston 534 for controlling movement of piston 534 toward and away from upper sliding surface 520. Activation device 532 is any of activation device 148 (shown in Figures 4 and 5), activation device 202 (shown in Figures 6 and 7), activation device 302 (shown in Figures 8 and 9), and/or activation device 402 (shown in Figure 10). A motor 542 is coupled to activation device 532 for control of the components thereof, such as cylinder 204 and/or cylinder 314 (shown in Figures 6-9), springs 404 (shown in Figure 10), and/or spindle 150 (shown in Figures 4 and 5), for moving piston 534 toward or away from upper sliding surface 520. More specifically, activation device 532 forces piston 534 in a first direction toward upper sliding surface 520 to apply a braking force to ring gear 502. Activation device 532 forces piston 534 in a second direction away from upper sliding surface 520 to lessen the brake force to enable supporting ring 504 to move rotationally with respect to ring gear 502. In the exemplary embodiment, control system 36 (shown in Figure 2) is coupled in communication with, such as in operational control communication with, motor 542 for controlling a movement of activation device 532.

During operation of wind turbine 10 (shown in Figures 1 and 2), a yaw direction of nacelle assembly 16 is controlled using yaw motors 66 (shown in Figure 2) and yaw bearing assembly 500. More specifically, to change the yaw direction of nacelle assembly 16, activation device 532 is activated to move piston 534 away from upper sliding surface 520. As such, shoe 536 and upper sliding pad 538 are moved away from upper sliding surface 520 with upper sliding pad 538 maintaining contact with upper sliding surface 520. By moving upper sliding pad 538 away from upper sliding surface 520 a braking force against ring gear 502 is reduced to allow movement among ring gear 502, base 58, and/or supporting ring 504. Yaw motors 66 are activated to rotate base 58 with respect to tower 12 to position nacelle assembly 16 at a desired yaw direction and then are deactivated.

To maintain the yaw direction of nacelle assembly 16, motor 542 activates activation device 532 to move piston 534 toward upper sliding surface 520. As such, shoe 536 and upper sliding pad 538 are moved toward upper sliding surface 520 to increase the braking force applied to upper sliding surface 520. Accordingly, the ability of supporting ring 504 and/or base 58 to move with respect to ring gear 502 is reduced such that the yaw direction of nacelle assembly 16 is maintained.

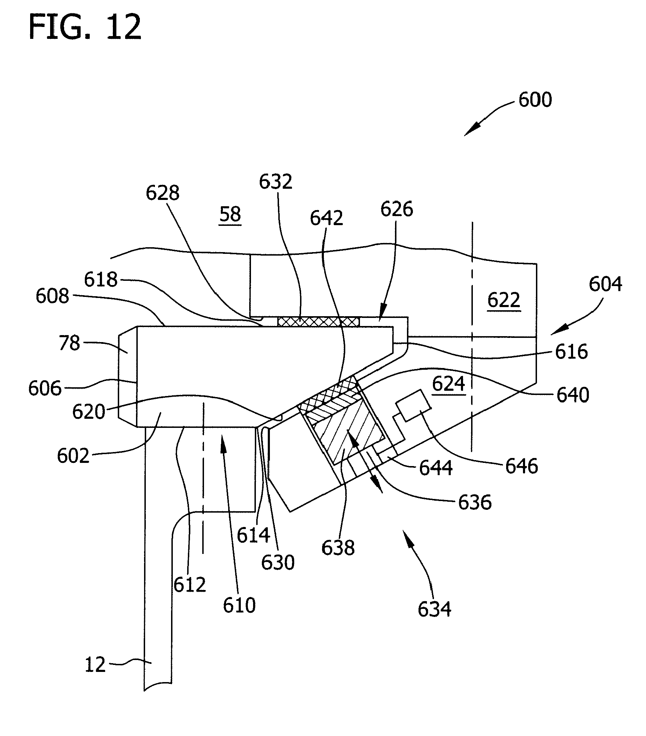

Figure 12 is a schematic cross-sectional view of a fifth alternative exemplary yaw bearing assembly 600 that may be used with nacelle assembly 16 (shown in Figure 2) as yaw bearing assembly 72 (shown in Figure 2). Similar components shown in Figures 1, 2, and 12 are numbered similarly.

In the exemplary embodiment, yaw bearing assembly 600 includes a ring gear 602 coupled to tower 12 and a supporting ring 604 coupled to base 58. Ring gear 602 includes a substantially vertically-aligned tooth face 606, a substantially horizontally-aligned upper face 608, and a lower face 610 having a substantially horizontal portion 612 and a tapered portion 614. A substantially vertically-aligned inner face 616 extends between upper face 608 and lower face 610. Tooth face 606 includes a plurality of teeth 78 configured to engage pinion gear 68 (shown in Figure 2). Upper face 608 includes an upper sliding surface 618, and tapered portion 614 of lower face 610 includes a lower sliding surface 620. Horizontal portion 612 of lower face 610 is coupled to tower 12.

Supporting ring 604 includes an upper portion 622 coupled to base 58 and a lower portion 624 coupled to upper portion 622. Upper portion 622 and lower portion 624 define a groove 626 that is shaped to correspond to a shape of ring gear 602. More specifically, in the exemplary embodiment, upper portion 622 includes a substantially horizontally-aligned lower face 628 that corresponds to upper face 608, and lower portion 624 includes an angled upper face 630 that corresponds to tapered portion 614 of lower face 610 of ring gear 602. Lower face 628 is positioned adjacent upper sliding surface 618, and upper face 630 is positioned adjacent to lower sliding surface 620. An upper sliding pad 632 is coupled to lower face 628 of supporting ring 604 adjacent to upper sliding surface 618 of ring gear 602. In the exemplary embodiment, upper sliding pad 632 extends circumferentially about lower face 628 and is in contact with upper sliding surface 618. Upper sliding pad 632 can be segmented to facilitate maintenance and/or repair. Alternatively, upper sliding pad 632 includes a plurality of pads that are spaced circumferentially about lower face 628.

In the exemplary embodiment, a brake assembly 634 is coupled to lower portion 624 of supporting ring 604 and at least partially extends through upper face 630. Brake assembly 634 includes an activation device 636, a piston 638 coupled to activation device 636, a shoe 640 coupled to piston 638, and a lower sliding pad 642 coupled to shoe 640. It should be understood that brake assembly 634 includes any suitable number of pistons 638 coupled to activation device 636. In an alternative embodiment, brake assembly 634 does not include shoe 640 and lower sliding pad 642 is coupled to piston 638. In the exemplary embodiment, at least a portion of piston 638 and/or shoe 640 is positioned within an opening 644 defined within upper face 630 of lower portion 624. Lower sliding pad 642 is positioned to extend outwardly from upper face 630 to contact lower sliding surface 620. In the exemplary embodiment, upper sliding pad 632 and lower sliding pad 642 are formed from any suitable material that enables supporting ring 604 to rotate with respect to ring gear 602. More specifically, materials for upper sliding pad 632 and lower sliding pad 642 and/or material for upper sliding surface 618 and/or lower sliding surface 620 are selected to enable yaw bearing assembly 600 to function as described herein. In a particular embodiment, upper sliding surface 618 and lower sliding surface 620 are steel and upper sliding pad 632 and lower sliding pad 642 are a conventional sliding material.

Activation device 636 is directly or indirectly coupled to piston 638 for controlling movement of piston 638 with respect to, such as toward and away from, lower sliding surface 620. Activation device 636 is any of activation device 148 (shown in Figures 4 and 5), activation device 202 (shown in Figures 6 and 7), activation device 302 (shown in Figures 8 and 9), and/or activation device 402 (shown in Figure 10). A motor 646 is coupled to activation device 636 for control of the components thereof, such as cylinder 204 and/or cylinder 314 (shown in Figures 6-9), springs 404 (shown in Figure 10), and/or spindle 150 (shown in Figures 4 and 5), for moving piston 638 toward or away from lower sliding surface 620. More specifically, activation device 636 forces piston 638 in a first direction toward lower sliding surface 620 to apply a braking force to ring gear 602. Activation device 636 forces piston 638 in a second direction away from lower sliding surface 620 to lessen the brake force to enable supporting ring 604 to move rotationally with respect to ring gear 602. In the exemplary embodiment, control system 36 (shown in Figure 2) is coupled in communication with, such as in operational control communication with, motor 646 for controlling a movement of activation device 636.

During operation of wind turbine 10 (shown in Figures 1 and 2), a yaw direction of nacelle assembly 16 is controlled using yaw motors 66 (shown in Figure 2) and yaw bearing assembly 600. More specifically, to change the yaw direction of nacelle assembly 16, activation device 636 is activated to move piston 638 away from lower sliding surface 620. As such, shoe 640 and lower sliding pad 642 are moved away from lower sliding surface 620 with lowing sliding pad 642 maintaining contact with lower sliding surface 620. By moving lower sliding pad 642 away from lower sliding surface 620, a braking force against ring gear 602 is reduced to allow movement between ring gear 602 and supporting ring 604. Yaw motors 66 are activated to rotate base 58 with respect to tower 12 to position nacelle assembly 16 at a desired yaw direction and then are deactivated.

To maintain the yaw direction of nacelle assembly 16, motor 646 activates activation device 636 to move piston 638 toward lower sliding surface 620. As such, shoe 640 and lower sliding pad 642 are moved toward lower sliding surface 620 to increase the braking force applied to lower sliding surface 620. Accordingly, the ability of supporting ring 604 to move with respect to ring gear 602 is reduced such that the yaw direction of nacelle assembly 16 is maintained.

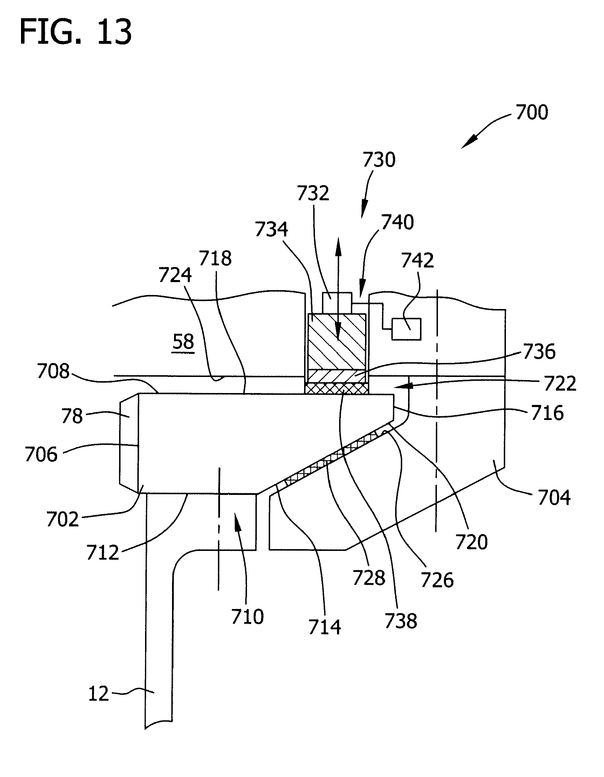

Figure 13 is a schematic cross-sectional view of a sixth alternative exemplary yaw bearing assembly 700 that may be used with nacelle assembly 16 (shown in Figure 2) as yaw bearing assembly 72 (shown in Figure 2). Similar components shown in Figures 1, 2, and 13 are numbered similarly.

In the exemplary embodiment, yaw bearing assembly 700 includes a ring gear 702 coupled to tower 12 and a supporting ring 704 coupled to base 58. Ring gear 702 includes a substantially vertically-aligned tooth face 706, a substantially horizontally-aligned upper face 708, and a lower face 710 having a substantially horizontal portion 712 and a tapered portion 714. A substantially vertically-aligned inner face 716 extends between upper face 708 and lower face 710. Tooth face 706 includes a plurality of teeth 78 configured to engage pinion gear 68 (shown in Figure 2). Upper face 708 includes an upper sliding surface 718, and tapered portion 714 of lower face 710 includes a lower sliding surface 720. Horizontal portion 712 of lower face 710 is coupled to adjacent to tower 12.

Supporting ring 704 is coupled to base 58. Alternatively, supporting ring 704 includes an upper portion coupled to base 58 and a lower portion coupled to the upper portion, as shown and described with respect to Figures 4 and 5. In the exemplary embodiment, base 58 and supporting ring 704 define a groove 722 that is shaped to correspond to a shape of ring gear 702. More specifically, in the exemplary embodiment, base 58 includes substantially horizontally-oriented lower face 724 that corresponds to upper face 708 of ring gear 702, and supporting ring 704 includes an angled upper face 726 that corresponds to tapered portion 714 of lower face 710. Lower face 724 is positioned adjacent upper sliding surface 718, and upper face 726 is positioned adjacent to lower sliding surface 720. A lower sliding pad 728 is coupled to upper face 726 of supporting ring 704 adjacent to lower sliding surface 720 of ring gear 702. In the exemplary embodiment, lower sliding pad 728 extends circumferentially about upper face 726 and is in contact with lower sliding surface 720. Lower sliding pad 728 can be segmented to facilitate maintenance and/or repair. Alternatively, lower sliding pad 728 includes a plurality of pads that are spaced circumferentially about upper face 726.

In the exemplary embodiment, a brake assembly 730 is coupled to base 58 and at least partially extends through lower face 724. Brake assembly 730 includes an activation device 732, a piston 734 coupled to activation device 732, a shoe 736 coupled to piston 734, and an upper sliding pad 738 coupled to shoe 736. It should be understood that brake assembly 730 includes any suitable number of pistons 734 coupled to activation device 732. In an alternative embodiment, brake assembly 730 does not include shoe 736 and sliding pad 738 is coupled to piston 734. In the exemplary embodiment, at least a portion of piston 734 and/or shoe 736 is positioned within an opening 740 defined within lower face 724 of base 58. Upper sliding pad 738 is positioned to extend outwardly from lower face 724 to contact upper sliding surface 718. In the exemplary embodiment, upper sliding pad 738 and lower sliding pad 728 are formed from any suitable material that enables supporting ring 704 to rotate with respect to ring gear 702. More specifically, materials for upper sliding pad 738 and lower sliding pad 728 and/or material for upper sliding surface 718 and/or lower sliding surface 720 are selected to enable yaw bearing assembly 700 to function as described herein. In a particular embodiment, upper sliding surface 718 and lower sliding surface 720 are steel and upper sliding pad 738 and lower sliding pad 728 are a conventional sliding material.

Activation device 732 is directly or indirectly coupled to piston 734 for controlling movement of piston 734 toward and away from upper sliding surface 718. Activation device 732 is any of activation device 148 (shown in Figures 4 and 5), activation device 202 (shown in Figures 6 and 7), activation device 302 (shown in Figures 8 and 9), and/or activation device 402 (shown in Figure 10). A motor 742 is coupled to activation device 732 for control of the components thereof, such as cylinder 204 and/or cylinder 314 (shown in Figures 6-9), springs 404 (shown in Figure 10), and/or spindle 150 (shown in Figures 4 and 5), for moving piston 734 toward or away from upper sliding surface 718. More specifically, activation device 732 forces piston 734 in a first direction toward upper sliding surface 718 to apply a braking force to ring gear 702. Activation device 732 forces piston 734 in a second direction away from upper sliding surface 718 to lessen the brake force to enable supporting ring 704 to move rotationally with respect to ring gear 702. In the exemplary embodiment, control system 36 (shown in Figure 2) is coupled in communication with, such as in operational control communication with, motor 742 for controlling a movement of activation device 732.

During operation of wind turbine 10 (shown in Figures 1 and 2), a yaw direction of nacelle assembly 16 is controlled using yaw motors 66 (shown in Figure 2) and yaw bearing assembly 700. More specifically, to change the yaw direction of nacelle assembly 16, activation device 732 is activated to move piston 734 away from upper sliding surface 718. As such, shoe 736 and upper sliding pad 738 are moved away from upper sliding surface 718 with upper sliding pad 738 maintaining contact with upper sliding surface 718. By moving upper sliding pad 738 away from upper sliding surface 718, a braking force against ring gear 702 is reduced to allow movement among ring gear 702, base 58, and/or supporting ring 704. Yaw motors 66 are activated to rotate base 58 with respect to tower 12 to position nacelle assembly 16 at a desired yaw direction and then are deactivated.

To maintain the yaw direction of nacelle assembly 16, motor 742 activates activation device 732 to move piston 734 toward upper sliding surface 718. As such, shoe 736 and upper sliding pad 738 are moved toward upper sliding surface 718 to increase the braking force applied to upper sliding surface 718. Accordingly, the ability of supporting ring 704 and/or base 58 to move with respect to ring gear 702 is reduced such that the yaw direction of nacelle assembly 16 is maintained.

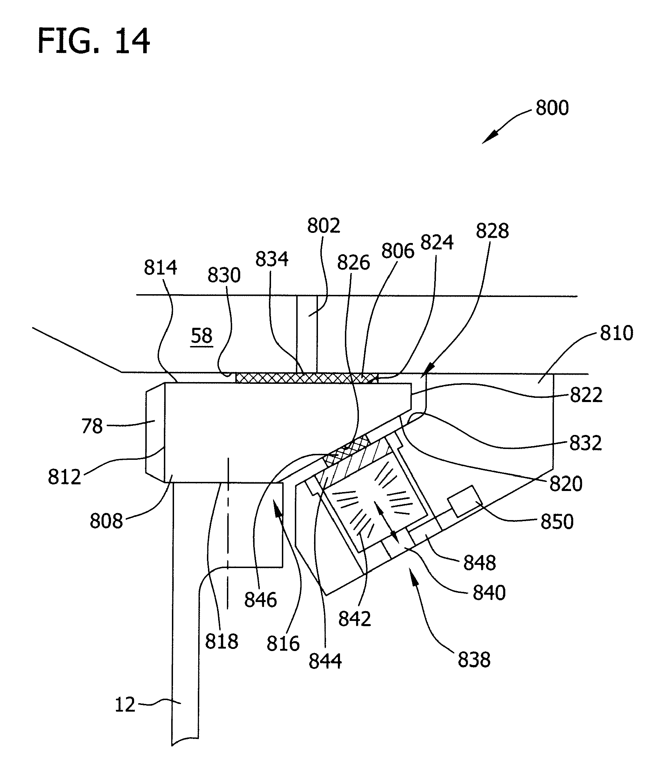

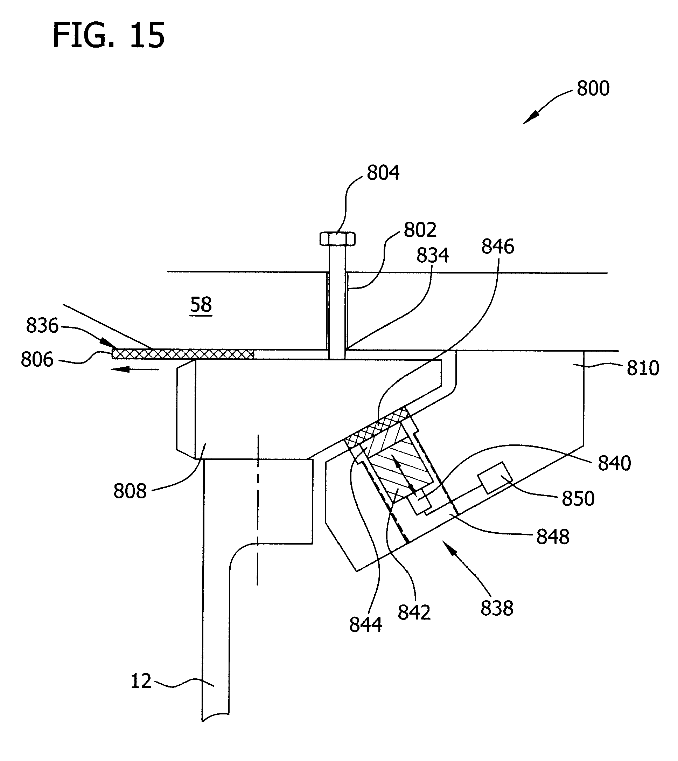

Figure 14 is a schematic cross-sectional view of a seventh alternative exemplary yaw bearing assembly 800 that may be used with nacelle assembly 16 (shown in Figure 2) as yaw bearing assembly 72. Figure 15 is a schematic cross-sectional view of yaw bearing assembly 800. Similar components shown in Figures 1, 2, 14, and 15 are numbered similarly. In the exemplary embodiment, base 58 includes at least one aperture 802 defined therethrough. Aperture 802 is configured to receive a screw jack 804, as described in more detail below. When base 58 includes more than one aperture 802, apertures 802 are spaced circumferentially about base 58 adjacent an upper sliding pad 806.

In the exemplary embodiment, yaw bearing assembly 800 includes a ring gear 808 coupled to tower 12 and a supporting ring 810 coupled to base 58. Ring gear 808 includes a substantially vertically-aligned tooth face 812, a substantially horizontally-aligned upper face 814, and a lower face 816 having a substantially horizontal portion 818 and a tapered portion 820. A substantially vertically-aligned inner face 822 extends between upper face 814 and lower face 816. Tooth face 812 includes a plurality of teeth 78 configured to engage pinion gear 68 (shown in Figure 2). Upper face 814 includes an upper sliding surface 824, and tapered portion 820 of lower face 816 includes a lower sliding surface 826. Horizontal portion 818 of lower face 816 is coupled to adjacent to tower 12.

Supporting ring 810 is coupled to base 58. Alternatively, supporting ring 810 includes an upper portion coupled to base 58 and a lower portion coupled to the upper portion, as shown and described with respect to Figures 4 and 5. In the exemplary embodiment, base 58 and supporting ring 810 define a groove 828that is shaped to correspond to a shape of ring gear 808. More specifically, in the exemplary embodiment, base 58 includes a substantially horizontally-oriented lower face 830 that corresponds to upper face 814 of ring gear 808, and supporting ring 810 includes an angled upper face 832 that corresponds to tapered portion 820 of lower face 816. Lower face 830 is positioned adjacent upper sliding surface 824, and upper face 832 is positioned adjacent to lower sliding surface 826. Upper sliding pad 806 is coupled to lower face 830 of base 58 adjacent to upper sliding surface 824 of ring gear 808.

In the exemplary embodiment, upper sliding pad 806 extends circumferentially about lower face 830 and is in contact with upper sliding surface 824. Upper sliding pad 806 is segmented for maintenance and/or repair as described in more detail below. Alternatively, upper sliding pad 806 includes a plurality of pads that are spaced circumferentially about lower face 830. Further, in the exemplary embodiment, upper sliding pad 806 does not cover a lower end 834 of aperture 802 through base 58. For example, apertures 802 are located between segments 836 of upper sliding pad 806.

In the exemplary embodiment, a brake assembly 838 is coupled to supporting ring 810 and at least partially extends through upper face 832. Brake assembly 838 includes an activation device 840, a piston 842 coupled to activation device 840, a shoe 844 coupled to piston 842, and a lower sliding pad 846 coupled to shoe 844. It should be understood that brake assembly 838 includes any suitable number of pistons 842 coupled to activation device 840. In an alternative embodiment, brake assembly 838 does not include shoe 844 and lower sliding pad 846 is coupled to piston 842. In the exemplary embodiment, at least a portion of piston 842 and/or shoe 844 is positioned within an opening 848 defined through supporting ring 810. Lower sliding pad 846 is positioned to extend outwardly from upper face 832 to contact lower sliding surface 826. In the exemplary embodiment, upper sliding pad 806 and lower sliding pad 846 are formed from any suitable material that enables supporting ring 810 to rotate with respect to ring gear 808. More specifically, materials for upper sliding pad 806 and lower sliding pad 846 and/or material for upper sliding surface 824 and/or lower sliding surface 826 are selected to enable yaw bearing assembly 800 to function as described herein. In a particular embodiment, upper sliding surface 824 and lower sliding surface 826 are steel and upper sliding pad 806 and lower sliding pad 846 are a conventional sliding material.

Activation device 840 is directly or indirectly coupled to piston 842 for controlling movement of piston 842 toward and away from lower sliding surface 826. Activation device 840 is any of activation device 148 (shown in Figures 4 and 5), activation device 202 (shown in Figures 6 and 7), activation device 302 (shown in Figures 8 and 9), and/or activation device 402 (shown in Figure 10). A motor 850 is coupled to activation device 840 for control of the components thereof, such as cylinder 204 and/or cylinder 314 (shown in Figures 6-9), springs 404 (shown in Figure 10), and/or spindle 150 (shown in Figures 4 and 5), for moving piston 842 toward or away from lower sliding surface 826. More specifically, activation device 840 forces piston 842 in a first direction toward lower sliding surface 826 to apply a braking force to ring gear 808. Activation device 840 forces piston 842 in a second direction away from lower sliding surface 826 to lessen the brake force to enable supporting ring 810 to move rotationally with respect to ring gear 808. In the exemplary embodiment, control system 36 (shown in Figure 2) is coupled in communication with, such as in operational control communication with, motor 850 for controlling a movement of activation device 840.

During operation of wind turbine 10 (shown in Figures 1 and 2), a yaw direction of nacelle assembly 16 is controlled using yaw motors 66 (shown in Figure 2) and yaw bearing assembly 800. More specifically, to change the yaw direction of nacelle assembly 16, activation device 840 is activated to move piston 842 away from lower sliding surface 826. As such, shoe 844 and lower sliding pad 846 are moved away from lower sliding surface 826 with lower sliding pad 846 maintaining contact with lower sliding surface 826. By moving lower sliding pad 846 away from lower sliding surface 826, a braking force against ring gear 808 is reduced to allow movement among ring gear 808, base 58, and/or supporting ring 810. Yaw motors 66 are activated to rotate base 58 with respect to tower 12 to position nacelle assembly 16 at a desired yaw direction and then are deactivated.

To maintain the yaw direction of nacelle assembly 16, motor 850 activates activation device 840 to move piston 842 toward lower sliding surface 826. As such, shoe 844 and lower sliding pad 846 are moved toward lower sliding surface 826 to increase the braking force applied to lower sliding surface 826. Accordingly, the ability of supporting ring 810 and/or base 58 to move with respect to ring gear 808 is reduced such that the yaw direction of nacelle assembly 16 is maintained.

To perform maintenance, repair, and/or replacement on yaw bearing assembly 800, a screw jack 804 or other suitable device is inserted through at least one aperture 802 adjacent to a segment 836 of upper sliding pad 806 to be maintained. Screw jack 804 is then adjusted to remove weight of base 58 from segment 836 by, for example, creating and/or adjusting a gap between base 58 and upper sliding pad 806. Segment 836 is then able to be removed from yaw bearing assembly 800 for repair and/or replacement. Segment 836 is replaced between base 58 and upper sliding surface 824, and screw jack 804 is removed from aperture 802.

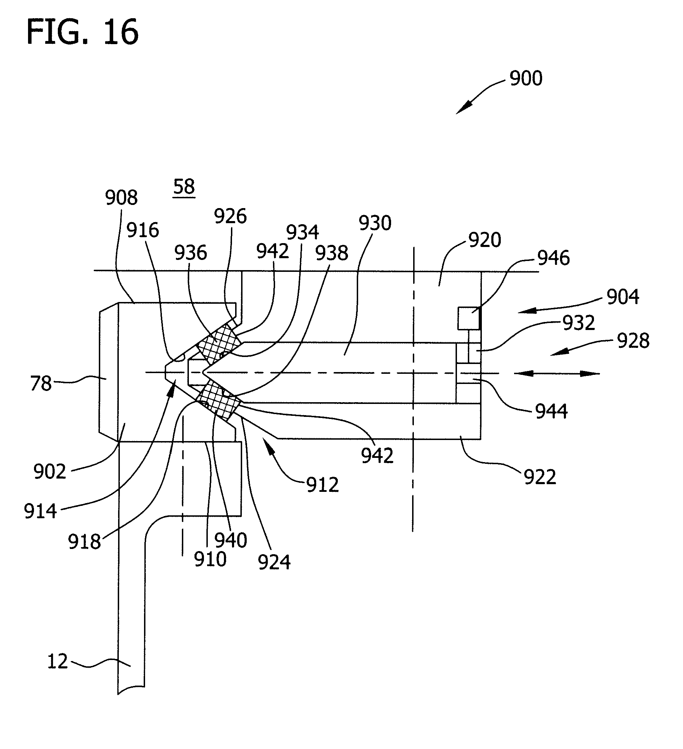

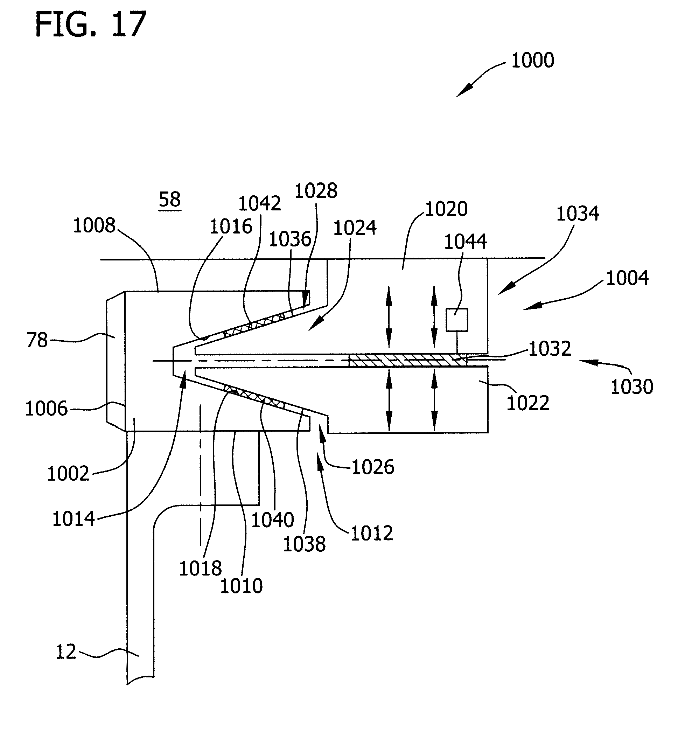

The maintenance method described above can be used for yaw bearing assembly 100 (shown in Figures 4 and 5), yaw bearing assembly 200 (shown in Figures 6 and 7), yaw bearing assembly 300 (shown in Figures 8 and 9), yaw bearing assembly 400 (shown in Figure 10), yaw bearing assembly 500 (shown in Figure 11), yaw bearing assembly 600 (shown in Figure 12), yaw bearing assembly 700 (shown in Figure 13), yaw bearing assembly 900 (shown in Figure 16), and/or yaw bearing assembly 1000 (shown in Figure 17) with slight modifications depending on the configuration of the yaw bearing assembly.

Figure 16 is a schematic cross-sectional view of an eighth alternative exemplary yaw bearing assembly 900 that may be used with nacelle assembly 16 (shown in Figure 2) as yaw bearing assembly 72 (shown in Figure 2). Similar components shown in Figures 1, 2, and 16 are numbered similarly.

In the exemplary embodiment, yaw bearing assembly 900 includes a ring gear 902 coupled to tower 12 and a supporting ring 904 coupled to base 58. Ring gear 902 includes a substantially vertically-aligned tooth face 906, a substantially horizontally-aligned upper face 908, and a substantially horizontally-aligned lower face 910. Tooth face 906 includes a plurality of teeth 78 configured to engage pinion gear 68 (shown in Figure 2). An inner face 912 extends between upper face 908 and lower face 910 and includes a generally V-shaped groove 914 having an angled upper sliding surface 916 and an angled lower sliding surface 918.

Supporting ring 904 includes an upper portion 920 coupled to base 58 and a wedge portion 922 extending from upper portion 920. Wedge portion 922 is shaped to correspond to a shape of groove 914. More specifically, in the exemplary embodiment, wedge portion 922 includes an angled lower face 924 that corresponds to lower sliding surface 918 and an angled upper face 926 that corresponds to upper sliding surface 916. A brake assembly 928 includes a wedge-shaped piston 930 extends through a substantially horizontally-aligned opening 932 through wedge portion 922. Piston 930 includes an angled upper face 934 having an upper sliding pad 936 coupled thereto and an angled lower face 938 having a lower sliding pad 940 coupled thereto. Upper face 934 and lower face 938 converge toward groove 914 to be at least partially received therein. In the exemplary embodiment, piston upper face 934 is substantially parallel to wedge portion upper face 926, and piston lower face 938 is substantially parallel to wedge portion lower face 924. Lower sliding pad 940 and upper sliding pad 936 are positioned to extend outwardly from an end 942 of opening 932 to contact lower sliding surface 918 and upper sliding surface 916, respectively. In the exemplary embodiment, upper sliding pad 936 and lower sliding pad 940 are formed from any suitable material that enables supporting ring 904 to rotate with respect to ring gear 902. More specifically, materials for upper sliding pad 936 and lower sliding pad 940 and/or material for upper sliding surface 916 and/or lower sliding surface 918 are selected to enable yaw bearing assembly 900 to function as described herein. In a particular embodiment, upper sliding surface 916 and lower sliding surface 918 are steel and upper sliding pad 936 and lower sliding pad 940 are a conventional sliding material.

In one embodiment, sliding pads are also coupled to wedge portion upper face 926 and wedge portion lower face 924 such that, when piston sliding pads 936 and 940 are moved away from sliding surfaces 916 and 918, the wedge portion sliding pads are in contact with sliding surfaces 916 and/or 918 to facilitate reducing friction between ring gear 902 and supporting ring 904. The sliding pads on wedge portion 922 may extend circumferentially about wedge portion 922 with openings at openings 932 or include a plurality of sliding pads that are spaced circumferentially about wedge portion 922. The sliding pads on wedge portion 922 may be segmented to facilitate performing maintenance, replacement, and/or repair.

An activation device 944 is coupled to piston 930 for controlling movement of piston 930 toward and away from lower sliding surface 918 and upper sliding surface 916. In the exemplary embodiment, lower sliding pad 940 is in contact with lower sliding surface 918, and upper sliding pad 936 is in contact with upper sliding surface 916. Further, activation device 944 is directly or indirectly coupled to piston 930 for controlling movement of piston 930 toward and away from upper sliding surface 916 and lower sliding surface 918. Activation device 944 is any of activation device 148 (shown in Figures 4 and 5), activation device 202 (shown in Figures 6 and 7), activation device 302 (shown in Figures 8 and 9), and/or activation device 402 (shown in Figure 10). A motor 850 is coupled to activation device 944 for control of the components thereof, such as cylinder 204 and/or cylinder 314 (shown in Figures 6-9), springs 404 (shown in Figure 10), and/or spindle 150 (shown in Figures 4 and 5), for moving piston 930 toward or away from lower sliding surface 918 and upper sliding surface 916.

More specifically, activation device 944 forces piston 930 in a first substantially horizontal direction toward lower sliding surface 918 and upper sliding surface 916 to apply a braking force to ring gear 902. Activation device 944 forces piston 930 in a second substantially horizontal direction away from lower sliding surface 918 and upper sliding surface 916 to lessen the brake force to enable supporting ring 904 to move rotationally with respect to ring gear 902. In the exemplary embodiment, control system 36 (shown in Figure 2) is coupled in communication with, such as in operational control communication with, motor 946 for controlling a movement of activation device 944.

During operation of wind turbine 10 (shown in Figures 1 and 2), a yaw direction of nacelle assembly 16 is controlled using yaw motors 66 (shown in Figure 2) and yaw bearing assembly 900. More specifically, to change the yaw direction of nacelle assembly 16, activation device 944 is activated to move piston 930 away from lower sliding surface 918 and upper sliding surface 916. As such, lower sliding pad 940 and upper sliding pad 936 are moved away from lower sliding surface 918 and upper sliding surface 916 with lower sliding pad 940 and/or upper sliding pad 936 maintaining contact with lower sliding surface 918 and/or upper sliding surface 916, respectively. By moving lower sliding pad 940 and upper sliding pad 936 away from lower sliding surface 918 and upper sliding surface 916, a braking force against ring gear 902 is reduced to allow movement between ring gear 902 and supporting ring 904. Yaw motors 66 are activated to rotate base 58 with respect to tower 12 to position nacelle assembly 16 at a desired yaw direction and then are deactivated.

To maintain the yaw direction of nacelle assembly 16, motor 946 activates activation device 944 to move piston 930 toward lower sliding surface 918 and upper sliding surface 916. As such, lower sliding pad 940 and upper sliding pad 936 are moved toward lower sliding surface 918 and upper sliding surface 916 to increase the braking force applied to lower sliding surface 918 and upper sliding surface 916. Accordingly, the ability of supporting ring 904 to move with respect to ring gear 902 is reduced such that the yaw direction of nacelle assembly 16 is maintained.

Figure 17 is a schematic cross-sectional view of a ninth alternative exemplary yaw bearing assembly 1000 that may be used with nacelle assembly 16 (shown in Figure 2) as yaw bearing assembly 72 (shown in Figure 2). Similar components shown in Figures 1, 2, and 17 are numbered similarly.

In the exemplary embodiment, yaw bearing assembly 1000 includes a ring gear 1002 coupled to tower 12 and a supporting ring 1004 coupled to base 58. Ring gear 1002 includes a substantially vertically-aligned tooth face 1006, a substantially horizontally-aligned upper face 1008, and a substantially horizontally-aligned lower face 1010. Tooth face 1006 includes a plurality of teeth 78 configured to engage pinion gear 68 (shown in Figure 2). An inner face 1012 extends between upper face 1008 and lower face 1010 and includes a generally V-shaped groove 1014 having an angled upper sliding surface 1016 and an angled lower sliding surface 1018.

Supporting ring 1004 includes an upper portion 1020 coupled to base 58 and a lower portion 1022 coupled to upper portion 1020. Upper portion 1020 and lower portion 1022 define a wedge portion 1024 that is shaped to correspond to a shape of groove 1014. More specifically, in the exemplary embodiment, lower portion 1022 includes an angled lower face 1026 that corresponds to lower sliding surface 1018, and upper portion 1020 includes an angled upper face 1028 that corresponds to upper sliding surface 1016. Upper face 1028 and lower face 1026 converge toward groove 1014 to be at least partially received therein.

In the exemplary embodiment, at a brake assembly 1030, upper portion 1020 is coupled to lower portion 1022 via an activation device 1032. Upper portion 1020 and lower portion 1022 at brake assembly 1030 is referred to herein as a piston 1034. An upper face 1036 at brake assembly 1030 is substantially parallel to upper face 1028 of supporting ring 1004, and a lower face 1038 at brake assembly 1030 is substantially parallel to lower face 1026 of supporting ring 1004. A lower sliding pad 1040 is coupled to lower face 1038, and an upper sliding pad 1042 is coupled to upper face 1036. Lower sliding pad 1040 and upper sliding pad 1042 are positioned to contact lower sliding surface 1018 and upper sliding surface 1016, respectively. In the exemplary embodiment, upper sliding pad 1042 and lower sliding pad 1040 are formed from any suitable material that enables supporting ring 1004 to rotate with respect to ring gear 1002. More specifically, materials for upper sliding pad 1042 and lower sliding pad 1040 and/or material for upper sliding surface 1016 and/or lower sliding surface 1018 are selected to enable yaw bearing assembly 1000 to function as described herein. In a particular embodiment, upper sliding surface 1016 and lower sliding surface 1018 are steel and upper sliding pad 1042 and lower sliding pad 1040 are a conventional sliding material.

In one embodiment, upper and lower sliding pads are also coupled to upper face 1028 of supporting ring 1004 and/or lower face 1026 of supporting ring 1004 such that, when brake assembly sliding pads 1040 and 1042 are moved away from sliding surfaces 1016 and 1018, the supporting ring sliding pads are in contact with sliding surfaces 1016 and/or 1018 to facilitate reducing friction between ring gear 1002 and supporting ring 1004. The sliding pads on supporting ring 1004 may extend circumferentially about supporting ring 1004 with openings at brake assemblies 1030 or include a plurality of sliding pads that are spaced circumferentially about supporting ring 1004. The sliding pads on supporting ring 1004 may be segmented to facilitate performing maintenance, replacement, and/or repair.

Activation device 1032 is coupled between upper portion 1020 and lower portion 1022 at brake assembly 1030 to control movement of lower sliding pad 1040 and upper sliding pad 1042 toward and away from lower sliding surface 1018 and upper sliding surface 1016. In the exemplary embodiment, lower sliding pad 1040 is in contact with lower sliding surface 1018, and upper sliding pad 1042 is in contact with upper sliding surface 1016. Further, activation device 1032 is directly or indirectly coupled to piston 1034 for controlling movement of upper sliding pad 1042 and lower sliding pad 1040 toward and away from upper sliding surface 1016 and lower sliding surface 1018. Activation device 1032 is any of activation device 148 (shown in Figures 4 and 5), activation device 202 (shown in Figures 6 and 7), activation device 302 (shown in Figures 8 and 9), and/or activation device 402 (shown in Figure 10). A motor 1044 is coupled to activation device 1032 for control of the components thereof, such as cylinder 204 and/or cylinder 314 (shown in Figures 6-9), springs 404 (shown in Figure 10), and/or spindle 150 (shown in Figures 4 and 5), for moving lower sliding pad 1040 and upper sliding pad 1042 toward or away from lower sliding surface 1018 and upper sliding surface 1016.

More specifically, activation device 1032 forces piston 1034 apart by moving lower portion 1022 downward in a first substantially vertical direction, thus moving lower sliding pad 1040 and upper sliding pad 1042 toward lower sliding surface 1018 and upper sliding surface 1016 to apply a braking force to ring gear 1002. Activation device 1032 forces piston 1034 together by moving lower portion 1022 upward in a second substantially vertical direction, thus, moving lower sliding pad 1040 and upper sliding pad 1042 away from lower sliding surface 1018 and upper sliding surface 1016 to lessen the brake force to enable supporting ring 1004 to move rotationally with respect to ring gear 1002. In the exemplary embodiment, control system 36 (shown in Figure 2) is coupled in communication with, such as in operational control communication with, motor 1044 for controlling a movement of activation device 1032.

During operation of wind turbine 10 (shown in Figures 1 and 2), a yaw direction of nacelle assembly 16 is controlled using yaw motors 66 (shown in Figure 2) and yaw bearing assembly 1000. More specifically, to change the yaw direction of nacelle assembly 16, activation device 1032 is activated to move piston 1034 away from lower sliding surface 1018 and upper sliding surface 1016. As such, lower sliding pad 1040 and upper sliding pad 1042 are moved away from lower sliding surface 1018 and upper sliding surface 1016 with lower sliding pad 1040 and/or upper sliding pad 1042 maintaining contact with lower sliding surface 1018 and/or upper sliding surface 1016, respectively. By moving lower sliding pad 1040 and upper sliding pad 1042 away from lower sliding surface 1018 and upper sliding surface 1016, a braking force against ring gear 1002 is reduced to allow movement between ring gear 1002 and supporting ring 1004. Yaw motors 66 are activated to rotate base 58 with respect to tower 12 to position nacelle assembly 16 at a desired yaw direction and then are deactivated.

To maintain the yaw direction of nacelle assembly 16, motor 1044 activates activation device 1032 to move piston 1034 toward lower sliding surface 1018 and upper sliding surface 1016. As such, lower sliding pad 1040 and upper sliding pad 1042 are moved toward lower sliding surface 1018 and upper sliding surface 1016 to increase the braking force applied to lower sliding surface 1018 and upper sliding surface 1016. Accordingly, the ability of supporting ring 1004 to move with respect to ring gear 1002 is reduced such that the yaw direction of nacelle assembly 16 is maintained.

Any of the above-described embodiments can be used singly or in combination within wind turbine 10 to provide a yaw bearing and braking system.

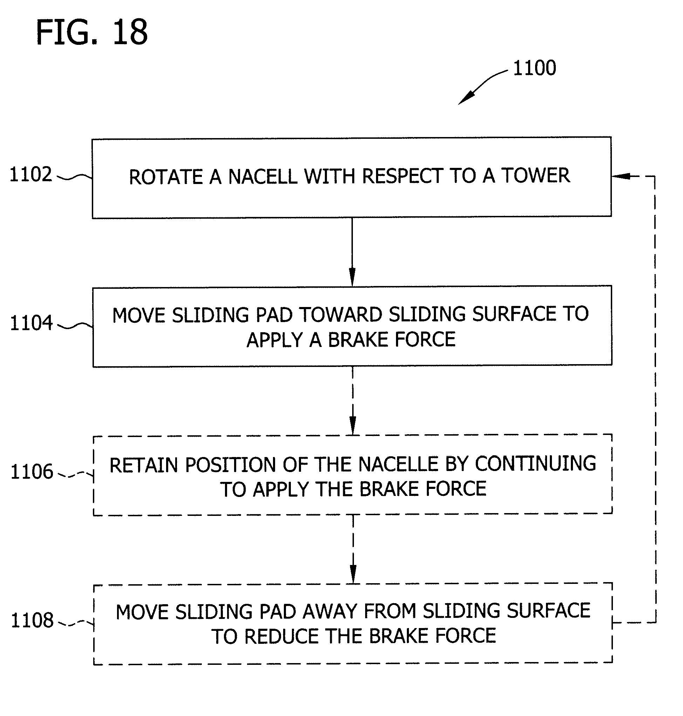

Figure 18 is a flowchart of an exemplary method 1100 that may be used with any of yaw bearing assemblies 72 (shown in Figure 2), 100 (shown in Figures 4 and 5), 200 (shown in Figures 6 and 7), 300 (shown in Figures 8 and 9), 400 (shown in Figure 10), 500 (shown in Figure 11), 600 (shown in Figure 12), 700 (shown in Figure 13), 800 (shown in Figures 14 and 15), 900 (shown in Figure 16), and/or 1000 (shown in Figure 17). For clarity of description, method 1100 will be described with respect to yaw bear assembly 100.

By performing method 1100, braking is performed within wind turbine 10 (shown in Figure 1). Method 1100 is performed by control system 36 (shown in Figure 1) sending commands and/or instructions to components of wind turbine 10. Processor 40 (shown in Figure 1) within control system 36 is programmed with code segments configured to perform method 1100. Alternatively, method 1100 is encoded on a computer-readable medium that is readable by control system 36. In such an embodiment, control system 36 and/or processor 40 is configured to read computer-readable medium for performing method 1100. In the exemplary embodiment, method 1100 is automatically performed continuously and/or at selected times. Alternatively, method 1100 is performed upon request of an operator of wind turbine 10 and/or when control system 36 determines method 1100 is to be performed.

Referring to Figures 1, 2, 4, 5, and 18, in the exemplary embodiment, method 1100 includes rotating 1102 nacelle 16 with respect to tower 12. More specifically, nacelle 16 is rotated 1102 using yaw bearing assembly 100 by, for example, operating yaw motor 66. To prevent nacelle 16 from continuing to rotate 1102, sliding pad 144 is moved 1104 toward first sliding surface 118 and/or second sliding surface 120 to apply a braking force to first sliding surface 118 and/or second sliding surface 120. More specifically, activation device 148 moves 1104 piston 140 toward first sliding surface 118 and/or second sliding surface 120 to apply the braking force between nacelle 16 and tower 12. Activation device 148 retains 1106 sliding pad 144 against first sliding surface 118 and/or second sliding surface 120 to maintain a yaw position of nacelle 16.

To adjust the yaw position of nacelle 16, sliding pad 144 is moved 1108 away from first sliding surface 118 and/or second sliding surface 120 to release and/or lessen the braking force. Once the braking force is sufficiently reduced, nacelle 16 is rotated 1102 with respect to tower 12, as described above.

The embodiments described herein provide a yaw bearing assembly that includes a brake assembly having a sliding pad that acts against a sliding surface to facilitate maintaining a desired yaw position of a nacelle assembly. The above-described embodiments require less force to change the yaw direction of the nacelle assembly, as compared to brake assemblies that include friction pads and/or surfaces. Further, the above-described yaw bearing assemblies facilitate maintaining a desired yaw position of a nacelle with respect to a tower. The brake assemblies described herein include activation devices that apply a pre-loaded force to a ring gear to facilitate maintaining the yaw position of the nacelle. More specifically, the pre-loaded force can be adjusted by adjusting the position of a sliding pad of the braking system with respect to a sliding surface of the ring gear. Further, the embodiments described herein use one or more sliding bearings rather than ball bearings to facilitate rotating the nacelle with respect to the tower, which reduces the manufacturing cost and/or the maintenance cost of the yaw bearing assembly as compared to yaw bearing assemblies that include ball bearings.

Exemplary embodiments of yaw bearing assemblies and methods for operating the same are described above in detail. The assemblies are not limited to the specific embodiments described herein, but rather, assembly components of systems and/or steps of the methods may be utilized independently and separately from other components and/or steps described herein. For example, the assemblies may also be used in combination with other bearing systems and methods, and are not limited to practice with only the wind turbine systems and methods as described herein. Rather, the exemplary embodiment can be implemented and utilized in connection with many other bearing applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A yaw bearing assembly, comprising:
   a first component having a first sliding surface and a second sliding surface; and,
   a brake assembly coupled with respect to said first component and adjacent to at least one of said first sliding surface and said second sliding surface, said brake assembly comprising:
      a piston;
      a sliding pad coupled to said piston; and,
      an activation device coupled to said piston for moving said sliding pad with respect to at least one of said first sliding surface and said second sliding surface.
2. A yaw bearing assembly in accordance with clause 1, wherein said activation device comprises:
   at least one lever arm coupled to said piston;
   a double-threaded spindle coupled to said at least one lever arm, said spindle configured to transform a rotational movement into a substantially linear movement; and,
   a motor coupled to said double-threaded spindle, said motor configured to rotate said double-threaded spindle for adjusting a position of said piston.
3. A yaw bearing assembly in accordance with any preceding clause, wherein said activation device comprises:
   a first lever arm coupled to said piston;
   a second lever arm coupled to said piston;
   a first rod coupled said first lever arm;
   a second rod coupled to said second lever arm; and,
   a cylinder coupled to said first rod and said second rod, said cylinder configured to move said first rod with respect to said second rod for adjusting a position of said piston.
4. A yaw bearing assembly in accordance with any preceding clause, wherein said activation device comprises:
   a first lever bracket coupled to said piston;
   a second lever bracket coupled to said piston;
   a first rod coupled said first lever bracket;
   a second rod coupled to said second lever bracket; and,
   a cylinder coupled to said first rod and said second rod, said cylinder configured to move said first rod with respect to said second rod for adjusting a position of said piston.
5. A yaw bearing assembly in accordance with any preceding clause, wherein said first component comprises a ring gear defining said first sliding surface and said second sliding surface, said yaw bearing assembly further comprising a supporting ring positioned with respect to said ring gear, and said brake assembly is coupled to said supporting ring.
6. A yaw bearing assembly in accordance with any preceding clause, wherein an angled face of said ring gear forms the first sliding surface and a substantially horizontally-aligned face of said ring gear forms said second sliding surface, and said brake assembly coupled to one of said supporting ring adjacent said first sliding surface and said supporting ring adjacent said second sliding surface.
7. A yaw bearing assembly in accordance with any preceding clause, wherein an angled face of said ring gear forms said second sliding surface and a substantially horizontally-aligned face of said ring gear forms said first sliding surface, and said brake assembly coupled to one of said supporting ring adjacent said first sliding surface and said supporting ring adjacent said second sliding surface.
8. A yaw bearing assembly in accordance with any preceding clause, wherein at least one of said ring gear and said supporting ring comprises a plurality of segments configured to be coupled together using at least one pin.
9. A yaw bearing assembly in accordance with any preceding clause, said first component comprises a ring gear defining said first sliding surface and said second sliding surface, said yaw bearing assembly further comprising a base of said nacelle assembly positioned with respect to said ring gear, and said brake assembly is coupled to said base.
10. A yaw bearing assembly in accordance with any preceding clause, wherein an angled face of said ring gear forms said first sliding surface and a substantially horizontally-aligned face of said ring gear forms said second sliding surface, and said brake assembly coupled to one of said base adjacent said first sliding surface and said base adjacent said second sliding surface.
11. A yaw bearing assembly in accordance with any preceding clause, wherein an angled face of said ring gear forms said second sliding surface and a substantially horizontally-aligned face of said ring gear forms said first sliding surface, and said brake assembly coupled to one of said base adjacent said first sliding surface and said base adjacent said second sliding surface.
12. A yaw bearing assembly in accordance with any preceding clause, wherein said base comprises:
   an aperture defined therethrough; and,
   a screw jack inserted into said aperture, said screw jack configured to separate said base and said ring gear to facilitate performing maintenance on said sliding pad.
13. A yaw bearing assembly in accordance with any preceding clause, wherein said piston is wedge-shaped and comprises:
   a first sliding pad adjacent to said first sliding surface; and,
   a second sliding pad adjacent to said second sliding surface.
14. A yaw bearing assembly in accordance with any preceding clause, wherein said activation device is configured to one of:
   move said piston with respect to at least one of said first sliding surface and said second sliding surface to adjust a braking force applied to said first sliding surface and said second sliding surface; and,
   move at least one of said first sliding pad and said second sliding pad with respect to at least one of said first sliding surface and said second sliding surface to adjust a braking force applied to said first sliding surface and said second sliding surface.
15. A wind turbine, comprising:
   a tower;
   a nacelle assembly comprising a base; and,
   a yaw bearing assembly operationally coupling said nacelle assembly to said tower, said yaw bearing assembly configured to rotate said nacelle assembly with respect to said tower, said yaw bearing assembly comprising:
      a first component having a first sliding surface and a second sliding surface; and,
      a brake assembly coupled with respect to said first component and adjacent to at least one of said first sliding surface and said second sliding surface, said brake assembly comprising:
         a piston;
         a sliding pad coupled to said piston; and,
         an activation device coupled to said piston for moving said sliding pad with respect to at least one of said first sliding surface and said second sliding surface.
16. A wind turbine in accordance with any preceding clause, wherein said first sliding surface is adjacent said base, and said base comprises a first sliding pad.
17. A wind turbine in accordance with any preceding clause further comprising a supporting ring coupled to said base and adjacent said second sliding surface, and said brake assembly is coupled to one of said base and said supporting ring.
18. A wind turbine in accordance with any preceding clause, further comprising a supporting ring coupled to said base, said supporting ring comprising:
   a first face adjacent said first sliding surface and comprising a first sliding pad; and,
   a second face adjacent said second sliding surface and comprising a second sliding pad.
19. A wind turbine in accordance with any preceding clause, wherein said brake assembly extends through one of said first face and said second face of said supporting ring.
20. A method for braking a wind turbine that includes a yaw bearing assembly coupled to a nacelle and a tower of the wind turbine, the yaw bearing assembly including a first component having a first sliding surface and a second sliding surface and a brake assembly coupled with respect to the first component and adjacent to at least one of the first sliding surface and the second sliding surface, the brake assembly including a piston, a sliding pad coupled to the piston, and an activation device coupled to the piston, said method comprising:
   rotating the nacelle with respect to the tower using the yaw bearing assembly; and
   moving the sliding pad toward at least one of the first sliding surface and the second sliding surface to apply a braking force to the one of the first sliding surface and the second sliding surface.

## Claims

1. A yaw bearing assembly (72, 100, 200, 300, 400, 500, 600, 700, 800, 900, 1000), comprising:
a first component having a first sliding surface (82) and a second sliding surface (120); and,
a brake assembly coupled with respect to said first component and adjacent to at least one of said first sliding surface and said second sliding surface, said brake assembly comprising:
a piston (140, 534, 638, 734, 842, 930, 1034);
a sliding pad (84) coupled to said piston; and,
an activation device (86, 148, 202, 302, 402, 532, 636, 732, 840, 944, 1032) coupled to said piston for moving said sliding pad with respect to at least one of said first sliding surface and said second sliding surface.

2. A yaw bearing assembly (72, 100, 200, 300, 400, 500, 600, 700, 800, 900, 1000) in accordance with claim 1, wherein said activation device (86, 148, 202, 302, 402, 532, 636, 732, 840, 944, 1032) comprises:
at least one lever arm (136) coupled to said piston (140, 534, 638, 734, 842, 930, 1034);
a double-threaded spindle (150) coupled to said at least one lever arm, said spindle configured to transform a rotational movement into a substantially linear movement; and,
a motor (162, 542, 646, 742, 850, 946, 1044) coupled to said double-threaded spindle, said motor configured to rotate said double-threaded spindle for adjusting a position of said piston.

3. A yaw bearing assembly (72, 100, 200, 300, 400, 500, 600, 700, 800, 900, 1000) in accordance with any preceding claim, wherein said activation device (86, 148, 202, 302, 402, 532, 636, 732, 840, 944, 1032) comprises:
a first lever arm (136) coupled to said piston (140, 534, 638, 734, 842, 930, 1034);
a second lever arm coupled to said piston;
a first rod (206, 316) coupled said first lever arm;
a second rod (208, 318) coupled to said second lever arm; and,
a cylinder (204, 314) coupled to said first rod (206, 316) and said second rod (208,318), said cylinder configured to move said first rod with respect to said second rod for adjusting a position of said piston.

4. A yaw bearing assembly (72, 100, 200, 300, 400, 500, 600, 700, 800, 900, 1000) in accordance with any preceding claim, wherein said activation device (86, 148, 202, 302, 402, 532, 636, 732, 840, 944, 1032) comprises:
a first lever bracket (304) coupled to said piston (140, 534, 638, 734, 842, 930, 1034);
a second lever bracket coupled to said piston;
a first rod (206, 316) coupled said first lever bracket;
a second rod (208, 318) coupled to said second lever bracket; and,
a cylinder (204, 314) coupled to said first rod and said second rod, said cylinder configured to move said first rod with respect to said second rod for adjusting a position of said piston.

5. A yaw bearing assembly (72, 100, 200, 300, 400, 500, 600, 700, 800, 900, 1000) in accordance with any preceding claim, wherein said first component comprises a ring gear (74,102,502,602,702,808,902,1002) defining said first sliding surface (82) and said second sliding surface (120), said yaw bearing assembly further comprising a supporting ring (104,504,604,704,810,904,1004) positioned with respect to said ring gear, and said brake assembly (80,134,530,634,730,838,928) is coupled to said supporting ring.

6. A yaw bearing assembly (72, 100, 200, 300, 400, 500, 600, 700, 800, 900, 1000) in accordance with any preceding claim, wherein an angled face of said ring gear (74, 102, 502, 602, 702, 808, 902, 1002) forms the first sliding surface (82) and a substantially horizontally-aligned face of said ring gear forms said second sliding surface (120), and said brake assembly (80, 134, 530, 634, 730, 838, 928) coupled to one of said supporting ring (104, 504, 604, 704, 810, 904, 1004) adjacent said first sliding surface and said supporting ring adjacent said second sliding surface.

7. A yaw bearing assembly (72, 100, 200, 300, 400, 500, 600, 700, 800, 900, 1000) in accordance with any preceding claim, wherein an angled face of said ring gear (74, 102, 502, 602, 702, 808, 902, 1002) forms said second sliding surface (120) and a substantially horizontally-aligned face of said ring gear forms said first sliding surface (82), and said brake assembly (80, 134, 530, 634, 730, 838, 928) coupled to one of said supporting ring adjacent said first sliding surface and said supporting ring (104,504,604,704,810,904,1004) adjacent said second sliding surface.

8. A yaw bearing assembly (72, 100, 200, 300, 400, 500, 600, 700, 800, 900, 1000) in accordance with any preceding claim, wherein at least one of said ring gear (74, 102, 502, 602, 702, 808, 902, 1002) and said supporting ring (104, 504, 604, 704, 810, 904, 1004) comprises a plurality of segments (92) configured to be coupled together using at least one pin (94).

9. A yaw bearing assembly (72, 100, 200, 300, 400, 500, 600, 700, 800, 900, 1000) in accordance with any preceding claim, said first component comprises a ring gear (74, 102, 502, 602, 702, 808, 902, 1002) defining said first sliding surface (82) and said second sliding surface (120), said yaw bearing assembly further comprising a base (58) of said nacelle assembly (16) positioned with respect to said ring gear, and said brake assembly (80,134,530,634,730,838,928) is coupled to said base.

10. A yaw bearing assembly (72, 100, 200, 300, 400, 500, 600, 700, 800, 900, 1000) in accordance with any preceding claim, wherein an angled face of said ring gear (74, 102, 502, 602, 702, 808, 902, 1002) forms said first sliding surface (82) and a substantially horizontally-aligned face of said ring gear forms said second sliding surface (120), and said brake assembly (80, 134, 530, 634, 730, 838, 928) coupled to one of said base (58) adjacent said first sliding surface and said base adjacent said second sliding surface.
